# EUROPEAN PATENT APPLICATION

(11) **EP 4 667 294 A1**
(43) Date of publication of application: **24.12.2025**
(21) Application number: 23948953.7
(22) Date of filing: 13.09.2023
(51) Int. Cl.: B60R 16/023, H02J 7/00, H01M 10/42, H01M 50/574, B60L 50/60

(54) **POWER DISTRIBUTION APPARATUS, BATTERY, AND ELECTRIC DEVICE**

(30) Priority: 17.08.2023 CN 202311040100
(71) Applicant: Contemporary Amperex Technology Co., Limited, Ningde, Fujian 352100 (CN)
(72) Inventor: LI, Yuanxin, Ningde, Fujian 352100 (CN); WANG, Chong, Ningde, Fujian 352100 (CN); ZHENG, Chenling, Ningde, Fujian 352100 (CN)
(74) Representative: Gong, Jinping
(86) International application number: PCT/CN2023/118605
(87) International publication number: WO 2025/035528

(57) **Abstract**

A power distribution apparatus (100), a battery, and a power consuming device. The power distribution apparatus (100) includes a first electrical component (110) and a second electrical component (120). The first electrical component (110) includes a first electrical connection structure (111). The second electrical component (120) includes a second electrical connection structure (121). The first electrical connection structure (111) and the second electrical connection structure (121) are spaced apart. An insulating member (130) is provided between the first electrical connection structure (111) and the second electrical connection structure (121).

## Description

The present application claims priority to Chinese Patent Application No. 202311040100.2, filed with the China National Intellectual Property Administration on August 17, 2023 and entitled "POWER DISTRIBUTION APPARATUS, BATTERY, AND POWER CONSUMING DEVICE", which is incorporated herein by reference in its entirety.

### TECHNICAL FIELD

This application relates to the technical field of electrical control equipment, and in particular, to a power distribution apparatus, a battery, and a power consuming device.

### BACKGROUND

With the advancement of science and technology, an increasing number of power consuming devices use batteries as power supplies, and the application of power distribution apparatuses in power consuming devices has also grown significantly. Power distribution apparatuses may be responsible for power distribution and management of high-voltage systems in power consuming devices. Power distribution apparatuses may also be used in batteries to control charging and discharging of the batteries. An electrical component in a power distribution apparatus usually includes an electrical connection structure used for electrically connecting to another electrical component. However, due to the compact arrangement of electrical components in a power distribution apparatus, a spacing between two electrical components is small, and a spacing between electrical connection structures of the two electrical components is small. As a result, the insulativity between the electrical connection structures of the two electrical components is poor, compromising the use reliability of the power distribution apparatus.

The statement herein merely provides background information related to this application and does not necessarily constitute the prior art.

### SUMMARY

An objective of embodiments of this application is to provide a power distribution apparatus, a battery, and a power consuming device, to solve problems in existing technologies, including, but not limited to, compromised use reliability of a power distribution apparatus due to poor insulativity between electrical connection structures of two electrical components.

Technical solutions used in the embodiments of this application are as follows:
According to a first aspect, a power distribution apparatus is provided. The power distribution apparatus includes a first electrical component and a second electrical component. The first electrical component includes a first electrical connection structure. The second electrical component includes a second electrical connection structure. The first electrical connection structure and the second electrical connection structure are spaced apart. An insulating member is provided between the first electrical connection structure and the second electrical connection structure.

For the power distribution apparatus in the embodiments of this application, in the first electrical component and the second electrical component, the insulating member is provided between the first electrical connection structure of the first electrical component and the second electrical connection structure of the second electrical component, and the first electrical connection structure and the second electrical connection structure are insulated by the insulating member, so that the insulation performance between the first electrical connection structure and the second electrical connection structure can be enhanced, i.e., the insulativity between electrical connection structures of two electrical components is enhanced, thereby reducing a short circuit risk, and enhancing the use reliability of the power distribution apparatus.

In an embodiment, the insulating member is provided at a position with the shortest distance between the first electrical connection structure and the second electrical connection structure.

Through the use of the technical solution in this embodiment, a creepage distance at the position with the shortest distance between the first electrical connection structure and the second electrical connection structure is minimum, the ins ulativity of the position with the shortest distance between the first electrical connection structure and the second electrical connection structure is poor, and a short circuit risk is high. The insulating member is provided at the position with the shortest distance between the first electrical connection structure and the second electrical connection structure, so that the insulativity at the position can be effectively enhanced, thereby effectively reducing a short circuit risk between electrical connection structures of two electrical components, and effectively enhancing the use reliability of the power distribution apparatus.

In an embodiment, a spacing at the position with the shortest distance between the first electrical connection structure and the second electrical connection structure ranges from 3 mm to 9 mm.

Through the use of the technical solution in this embodiment, the spacing at the position with the shortest distance between the first electrical connection structure and the second electrical connection structure ranges from 3 mm to 9 mm, and a short circuit is likely to occur. The insulating member 130 is provided at the position with the shortest distance between the first electrical connection structure and the second electrical connection structure, so that the insulativity between the first electrical connection structure and the second electrical connection structure can be effectively enhanced, thereby effectively reducing a short circuit risk. In addition, a large mounting space can further be provided for the insulating member between the first electrical connection structure and the second electrical connection structure. In this way, the insulating member with a large size can be disposed, so that the insulating member can adequately insulate the first electrical connection structure from the second electrical connection structure.

In an embodiment, the spacing at the position with the shortest distance between the first electrical connection structure and the second electrical connection structure ranges from 3 mm to 6 mm.

Through the use of the technical solution in this embodiment, the spacing at the position with the shortest distance between the first electrical connection structure and the second electrical connection structure ranges from 3 mm to 6 mm, and a short circuit is more likely to occur. The insulating member is provided at the position with the shortest distance between the first electrical connection structure and the second electrical connection structure, so that the insulativity between the first electrical connection structure and the second electrical connection structure can be effectively enhanced, thereby effectively reducing a short circuit risk. In addition, a large mounting space can further be provided for the insulating member between the first electrical connection structure and the second electrical connection structure. In this way, the insulating member with a large size can be disposed, so that the insulating member can adequately insulate the first electrical connection structure from the second electrical connection structure.

In an embodiment, the first electrical connection structure includes a first terminal and a first electrical connection member. The first electrical connection member is electrically connected to the first terminal. The second electrical connection structure includes a second terminal and a second electrical connection member. The second electrical connection member is electrically connected to the second terminal. In a case that the position with the shortest distance between the first electrical connection structure and the second electrical connection structure is located between the first terminal and the second terminal, the insulating member is provided between the first terminal and the second terminal. In a case that the position with the shortest distance between the first electrical connection structure and the second electrical connection structure is located between the first electrical connection member and the second electrical connection member, the insulating member is provided between the first electrical connection member and the second electrical connection member.

Through the use of the technical solution in this embodiment, the insulating member is provided at the position with the shortest distance between the first electrical connection structure and the second electrical connection structure. In this way, the insulativity between the first electrical connection structure and the second electrical connection structure can be effectively enhanced, thereby effectively reducing a short circuit risk between the first electrical connection structure and the second electrical connection structure, and enhancing the use reliability of the power distribution apparatus.

In an embodiment, the first electrical connection structure includes the first terminal and the first electrical connection member. The first electrical connection member is electrically connected to the first terminal. The second electrical connection structure includes the second terminal and the second electrical connection member. The second electrical connection member is electrically connected to the second terminal. The insulating member is provided between the first terminal and the second terminal. The insulating member is provided between the first electrical connection member and the second electrical connection member.

Through the use of the technical solution in this embodiment, the insulating members are provided between the first terminal and the second terminal and between the first electrical connection member and the second electrical connection member. In this way, the first electrical connection structure and the second electrical connection structure can be adequately insulated, thereby further effectively enhancing the insulativity between the first electrical connection structure and the second electrical connection structure, and providing better use reliability of the power distribution apparatus.

In an embodiment, the first electrical component is a first relay. The first terminal is a connection terminal led out from a contact of the first relay. The second electrical component is a second relay. The second terminal is a connection terminal led out from a contact of the second relay.

Through the use of the technical solution in this embodiment, the insulating member is provided between the connection terminal led out from the contact of the first relay and the connection terminal led out from the contact of the second relay in the power distribution apparatus. In this way, a short circuit risk between the first relay and the second relay in the power distribution apparatus can be effectively reduced, thereby effectively reducing a short circuit risk of the power distribution apparatus, and enhancing the use reliability of the power distribution apparatus.

In an embodiment, the power distribution apparatus further includes a mounting base. The mounting base is constructed with a first accommodating cavity and a second accommodating cavity. The first relay further includes a first switch unit. The first switch unit is electrically connected to the first terminal. The first switch unit is exposed from the first accommodating cavity. The second relay includes a second switch unit. The second switch unit is electrically connected to the second terminal. The second switch unit is exposed from the second accommodating cavity.

Through the use of the technical solution in this embodiment, the first switch unit of the first relay is directly exposed from the first accommodating cavity, and the second switch of the second relay is directly exposed from the second accommodating cavity. In this way, in the power distribution apparatus, a space occupied by a case of the first relay and a case of the second relay can be avoided, thereby enhancing the structural compactness of the power distribution apparatus, reducing the overall dimensions of the power distribution apparatus, enhancing the performance of the power distribution apparatus, reducing manufacturing costs, and also reducing a spacing between the first electrical connection structure and the second electrical connection structure. In addition, the first relay and the second relay are usually elements with large sizes in the power distribution apparatus. As the case of the first relay and the case of the second relay are omitted, a large space can be reserved for the power distribution apparatus, thereby effectively enhancing the structural compactness of the power distribution apparatus.

In an embodiment, the first accommodating cavity is provided with a first opening. The second accommodating cavity is provided with a second opening. The first opening and the second opening are located on a same side of the mounting base. The first terminal protrudes from the first opening. The second terminal protrudes from the second opening.

Through the use of the technical solution in this embodiment, the first terminal and the second terminal respectively protrude from the first opening and the second opening, thereby facilitating the electrical connection between the first terminal and the first electrical connection member and the electrical connection between the second terminal and the second electrical connection member. In addition, the first opening and the second opening are located on the same side of the mounting base. In this way, the first electrical connection member and the second electrical connection member can be electrically connected on the same side, so that the assembly operations of the power distribution apparatus are simple, thereby enhancing the production efficiency of the power distribution apparatus.

In an embodiment, in a case that the insulating member is provided between the first terminal and the second terminal, the insulating member located between the first terminal and the second terminal is a first insulating member. A projection of the first insulating member in a first direction covers a projection of a portion of the first terminal that protrudes from the first opening in the first direction, and the first direction is a distribution direction of the first terminal and the second terminal. In addition/Alternatively, the projection of the first insulating member in the first direction covers a projection of a portion of the second terminal that protrudes from the second opening in the first direction, and the first direction is the distribution direction of the first terminal and the second terminal.

Through the use of the technical solution in this embodiment, the first insulating member may adequately insulate the first terminal from the second terminal, so that the insulativity between the first terminal and the second terminal is adequate, and a short circuit risk is lower, thereby enhancing the use reliability of the power distribution apparatus.

In an embodiment, in a case that the insulating member is provided between the first terminal and the second terminal. The insulating member located between the first terminal and the second terminal is the first insulating member. In a second direction, the first insulating member is disposed protruding with respect to the first terminal, the second direction intersects the first direction, and the first direction is the distribution direction of the first terminal and the second terminal. In addition/Alternatively, in the second direction, the first insulating member is disposed protruding with respect to the second terminal, the second direction intersects the first direction, and the first direction is the distribution direction of the first terminal and the second terminal.

Through the use of the technical solution in this embodiment, a creepage distance between the first terminal and the second terminal can be increased, thereby enhancing the insulating reliability between the first terminal and the second terminal, and enhancing the use reliability of the power distribution apparatus 100.

In an embodiment, in a case that the first insulating member protrudes from the first terminal, a protrusion height of the first insulating member with respect to the first terminal is H₁, where 5 mm ≤ H₁≤ 30 mm. In a case that the first insulating member protrudes from the second terminal, a protrusion height of the first insulating member with respect to the second terminal is H₂, where 5 mm ≤ H₂ ≤ 30 mm.

Through the use of the technical solution in this embodiment, a suitable creepage distance is provided between the first terminal and the second terminal, and good insulativity is provided between the first terminal and the second terminal. In addition, the dimensional design of the first insulating member is reasonable with minimal redundancy and low costs, thereby also reducing the overall dimensions of the power distribution apparatus.

In an embodiment, the first insulating member and the mounting base are an integrally formed structure.

Through the use of the technical solution in this embodiment, the first insulating member and the mounting base are an integrally formed structure, so that the connection reliability between the first insulating member and the mounting base is adequate, thereby enhancing the use reliability of the power distribution apparatus. In addition, the manufacturing of the first insulating member and the mounting base is simple, thereby enhancing the production efficiency.

In an embodiment, the power distribution apparatus further includes a first insulating cover member, the first insulating cover member covers the first opening and blocks the first opening, and the first insulating cover member is provided with a first through hole, and the first terminal passes through the first through hole. In addition/Alternatively, the power distribution apparatus further includes a second insulating cover member, the second insulating cover member covers the second opening and blocks the second opening, and the second insulating cover member is provided with a second through hole, and the second terminal passes through the second through hole.

Through the use of the technical solution in this embodiment, the first insulating cover member can close the first opening, thereby insulating and protecting the first switch unit, and similarly, the second insulating cover member can close the second opening, thereby insulating and protecting the second switch unit, thereby enhancing the use reliability of the power distribution apparatus.

In an embodiment, in a case that the power distribution apparatus includes the first insulating cover member, the first relay includes a plurality of first electrical connection structures, a first insulating isolation portion is disposed at a lateral portion of the first insulating cover member that faces away from the first switch unit, and the first insulating isolation portion is located between two adjacent first electrical connection structures. In a case that the power distribution apparatus includes the second insulating cover member, the first relay includes a plurality of second electrical connection structures, a second insulating isolation portion is disposed at a lateral portion of the second insulating cover member that faces away from the second switch unit, and the second insulating isolation portion is located between two adjacent second electrical connection structures.

Through the use of the technical solution in this embodiment, the first insulating isolation portion insulates two adjacent first electrical connection structures, so that the insulation performance between the two adjacent first electrical connection structures can be enhanced, thereby reducing a short circuit risk of the first relay, further enhancing the use reliability of the first relay, and enhancing the use reliability of the power distribution apparatus, and similarly, the second insulating isolation portion insulates two adjacent second electrical connection structures, so that the insulation performance between the two adjacent second electrical connection structures can be enhanced, thereby reducing a short circuit risk of the second relay, further enhancing the use reliability of the second relay, and enhancing the use reliability of the power distribution apparatus.

In an embodiment, a mounting gap is formed between cavity walls of the first accommodating cavity and the second accommodating cavity that are opposite to each other.

Through the use of the technical solution in this embodiment, the first relay and the second relay can be insulated by the mounting gap, thereby enhancing the insulativity between the first relay and the second relay, reducing a short circuit risk, and enhancing the use reliability of the power distribution apparatus.

In an embodiment, the first electrical connection member and the second electrical connection member are located on two opposite sides of the mounting gap.

Through the use of the technical solution in this embodiment, the mounting gap can insulate the first electrical connection member and the second electrical connection member, so that a short circuit risk can be reduced, thereby enhancing the use reliability of the power distribution apparatus.

In an embodiment, in a case that the insulating member is provided between the first electrical connection member and the second electrical connection member. The insulating member located between the first electrical connection member and the second electrical connection member is a second insulating member. The first electrical connection member includes a first electrical connection section and a second electrical connection section that are connected to each other. The first electrical connection section is electrically connected to the first terminal. The second electrical connection member includes a third electrical connection section and a fourth electrical connection section. The third electrical connection section is electrically connected to the second terminal. The second electrical connection section and the fourth electrical connection section are located at the mounting gap. The second insulating member is provided between the second electrical connection section and the fourth electrical connection section.

Through the use of the technical solution in this embodiment, the second electrical connection section and the fourth electrical connection section are located in the mounting gap, and the second electrical connection section and the fourth electrical connection section can use the mounting gap as a mounting space, thereby enhancing the structural compactness of the power distribution apparatus, reducing the overall dimensions of the power distribution apparatus, and enhancing the structural compactness and reducing the manufacturing costs of the power consuming device and the battery. In addition, the arrangement of the second insulating member provides better insulativity between the first electrical connection member and the second electrical connection member, so that a short circuit risk is lower, thereby enhancing the use reliability of the power distribution apparatus.

In an embodiment, a first insulating sleeve is sleeved over the second electrical connection section, and a portion of the first insulating sleeve that is located between the second electrical connection section and the fourth electrical connection section at least forms a portion of the second insulating member. In addition/Alternatively, a second insulating sleeve is sleeved over the fourth electrical connection section, and a portion of the second insulating sleeve that is located between the second electrical connection section and the fourth electrical connection section at least forms a portion of the second insulating member.

Through the use of the technical solution in this embodiment, the sleeving and mounting operations of the first insulating sleeve and the second insulating sleeve are simple, thereby enhancing the production efficiency of the power distribution apparatus. In addition, the insulating structure is simple, thereby also reducing the manufacturing costs of the power distribution apparatus.

In an embodiment, the second insulating member and the mounting base are an integrally formed structure. Alternatively, the second insulating member and the mounting base are split structures.

Through the use of the technical solution in this embodiment, the second insulating member and the mounting base are an integrally formed structure, the connection reliability between the second insulating member and the mounting base is adequate, and the insulating reliability of the second insulating member is adequate, thereby enhancing the use reliability of the power distribution apparatus. The mounting base and the second insulating member are split structures, so that the mounting base and the second insulating member can be flexibly disposed, thereby facilitating processing and manufacturing.

According to a second aspect, a battery is provided, including the power distribution apparatus in the foregoing embodiments.

According to a third aspect, a power consuming device is provided, including the power distribution apparatus in the foregoing embodiments, and/or, including the battery in the foregoing embodiments.

The above description only refers to an overview of the technical solution of this application. In order to understand the technical means of this application more clearly, it can be implemented according to the content of the description. In order to make the above-mentioned and other purposes, features and advantages of this application more apparent, the specific embodiments of this application are listed below.

### BRIEF DESCRIPTION OF THE DRAWINGS

In order to provide a clearer explanation of the technical solution of the embodiments of this application, a brief introduction will be given to the accompanying drawings required to describe the embodiments or existing technologies. It is evident that the accompanying drawings described below are only some embodiments of this application. For ordinary technical personnel in the art, other accompanying drawings can be obtained based on these drawings without any creative effort.
FIG. 1 is a schematic structural diagram of a vehicle according to an embodiment of this application;
FIG. 2 is a schematic structural diagram of a battery according to another embodiment of this application;
FIG. 3 is a schematic structural diagram of a battery cell according to yet another embodiment of this application;
FIG. 4 is a schematic exploded view of the battery cell shown in FIG. 3;
FIG. 5 is a schematic structural diagram of a power distribution apparatus from a first perspective according to yet another embodiment of this application;
FIG. 6 is a schematic exploded view of the power distribution apparatus shown in FIG. 5;
FIG. 7 is a schematic structural diagram of the power distribution apparatus shown in FIG. 5 with a first housing cover and an insulating heat conduction member concealed;
FIG. 8 is a schematic exploded view of the power distribution apparatus shown in FIG. 5 with a first housing cover and an insulating heat conduction member concealed;
FIG. 9 is a schematic structural diagram of a mounting base shown in FIG. 8;
FIG. 10 is a schematic structural diagram of a second housing cover shown in FIG. 8;
FIG. 11 is a schematic structural diagram of the power distribution apparatus shown in FIG. 5 from a second perspective;
FIG. 12 is a cross-sectional view along a line A-A in FIG. 11;
FIG. 13 is a partial enlarged view at a position B in FIG. 12;
FIG. 14 is a schematic structural diagram of a power distribution apparatus from a third perspective according to yet another embodiment of this application;
FIG. 15 is a schematic structural diagram of the power distribution apparatus shown in FIG. 14 from a fourth perspective;
FIG. 16 is a schematic structural diagram of a power distribution apparatus according to yet another embodiment of this application;
FIG. 17 is a schematic exploded view of the power distribution apparatus shown in FIG. 16;
FIG. 18 is a schematic structural diagram of the power distribution apparatus shown in FIG. 16 with a first housing cover and an insulating heat conduction member concealed; and
FIG. 19 is a schematic exploded view of the power distribution apparatus shown in FIG. 16 with a first housing cover and an insulating heat conduction member concealed.

Reference numerals in the drawings:
1000. vehicle; 1100. battery; 1200. controller; 1300. motor; 10. housing; 11. first part; 12. second part; 20. battery cell; 21. end cover; 211. electrode terminal; 212. pressure relief mechanism; 22. case; 23. electrode assembly; 100. power distribution apparatus; 1001. mounting gap; 110. first electrical component; 1101. first relay; 1102. main positive relay; 111. first electrical connection structure; 1111. first terminal; 11111. first electrical connection portion; 11112. first bolt; 1112. first electrical connection member; 11121. first electrical connection section; 11122. second electrical connection section; 11123. fifth electrical connection section; 11124. first connection hole; 11125. seventh electrical connection section; 112. first switch unit; 120. second electrical component; 1201. second relay; 1202. main negative relay; 121. second electrical connection structure; 1211. second terminal; 12111. second electrical connection portion; 12112. second bolt; 1212. second electrical connection member; 12121. third electrical connection section; 12122. fourth electrical connection section; 12123. sixth electrical connection section; 12124. second connection hole; 12125. eighth electrical connection section; 122. second switch unit; 130. insulating member; 131. first insulating member; 132. second insulating member; 133. first insulating sleeve; 134. second insulating sleeve; 141. mounting base; 1411. first accommodating cavity; 14111. first opening; 1412. second accommodating cavity; 14121. second opening; 1413. third accommodating cavity; 1414. fourth accommodating cavity; 142. first housing cover; 1421. peripheral rim; 14211. snap-fit clip; 1422. fifth accommodating cavity; 1423. sixth accommodating cavity; 1424. seventh accommodating cavity; 1425. insulating isolation plate; 143. second housing cover; 1431. accommodating hole; 151. third electrical connection member; 152. fourth electrical connection member; 153. fifth electrical connection member; 160. connector; 170. insulating heat conduction member; 181. fuse; 182. pre-charge resistor; 183. pre-charge relay; 1831. mating terminal; 191. first insulating cover member; 1911. first insulating isolation portion; 1912. first through hole; 192. second insulating cover member; 1921. second insulating isolation portion; and 1922. second through hole.

### DETAILED DESCRIPTION

To make the technical problems solved by this application, the technical solutions, and the beneficial effects clearer, this application is further described below in detail with reference to the accompanying drawings and the embodiments. It should be understood that the specific embodiments described herein are merely used to explain this application but are not intended to limit this application.

Unless defined otherwise, all technical and scientific terms used herein have the same meaning as commonly understood by those skilled in the technical filed to which this application belongs. The terminology used herein is for the purpose of describing particular embodiments only and is not intended to limit this application. The terms "comprising" and "having" and any variations thereof in the description and claims of this application and the above description of the accompanying drawings are intended to cover non-exclusive inclusions.

In the description according to the embodiments of this application, the technical terms "first", "second", and the like are only used to distinguish different objects, and should not be understood as indicating or implying relative importance or implying the number, specific order or primary and secondary relationship of indicated technical features. Therefore, features defining "first" and "second" can explicitly or implicitly include one or more of the features.

Reference herein to an "embodiment" means that a specific feature, structure, or characteristic described in connection with the embodiment can be included in at least one embodiment of this application. The phrase shown in various locations in the specification may not necessarily refer to a same embodiment, and is not an independent or alternative embodiment exclusive from another embodiment. It shall be explicitly and implicitly understood by those skilled in the art that the embodiments described herein may be combined with other embodiments in any suitable manner.

In the description of this application, the term "and/or" is merely an association to describe the associated objects. It can mean that there are three kinds of relationships, such as A and/or B, which means that A exists alone, A and B exist at the same time, and B exists alone. In addition, in this specification, the character "/" usually indicates an "or" relationship between the associated objects.

In the description of the embodiments of this application, the term "a plurality of" means two or more (including two). Similarly, "a plurality of groups" means two or more groups (including two groups), and "a plurality of pieces" means two or more pieces (including two pieces). Unless clearly and specifically defined otherwise, "a plurality of" means one or more.

In the description according to the embodiments of this application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing this application and simplifying the description, rather than indicating or implying that the involved device or element should have a specific orientation or should be configured or operated in the specific orientation, therefore, they cannot be understood as limiting this application.

In the description according to the embodiments of this application, unless expressly specified and defined otherwise, the technical terms "installed", "connected to", "connected with", "fixed", or the like should be interpreted in a broad sense. For example, a connection may refer to a fixed connection, a disassembly connection or an integral connection; or may refer to a mechanical connection or an electrical connection; or may refer to a direct connection or an indirect connection through an intermediate medium; or may refer to an internal communication between the two elements or the interaction relationship between the two elements. For those of ordinary skill in the art, the specific meanings of the above terms in this application may be interpreted according to specific situations.

In the description of the embodiments of this application, unless explicitly specified or defined otherwise, when an element is referred to as being "fixed to" or "disposed on" another element, it may be directly on the other element or indirectly on the other element. When an element is referred to as being "connected to" another element, it may be directly connected to the other element or indirectly connected to the other element.

In the description of the embodiments of this application, unless explicitly specified or defined otherwise, the technical term "adjacent" refers to proximity in position. For example, for three elements A1, A2, and B, if the distance between A1 and B is greater than that between A2 and B, A2 is closer to B compared to A1, i.e., A2 is adjacent to B, or in other words, B is adjacent to A2. For another example, when a plurality of C elements are provided and the plurality of C elements are C1, C2, ..., CN, if one of the C elements, e.g., C2, is closer to the element B than the other C elements, B is adjacent to C2, or in other words, C2 is adjacent to B.

In this application, for ease of description, the Z-axis in the accompanying drawings represents the up-down direction, with the positive direction of the Z-axis indicating upward and the negative direction of the Z-axis indicating downward, the Y-axis in the accompanying drawings represents the left-right direction, with the positive direction of the Y-axis indicating leftward and the negative direction of the Y-axis indicating rightward, and the X-axis in the accompanying drawings represents the front-back direction, with the positive direction of the X-axis indicating backward and the negative direction of the X-axis indicating forward.

The power consuming device may be an apparatus using a battery as a power supply. The power supply provides electrical energy to the power consuming device to drive the power consuming device to operate. The power consuming device is usually provided with a power distribution apparatus. The power distribution apparatus is configured to control the running of a high-voltage circuit in the power consuming device. The high-voltage circuit is a circuit with a voltage exceeding 60 V. For example, the power distribution apparatus may be a high-voltage power distribution box. The high-voltage power distribution box may be responsible for power distribution and management of the high-voltage circuit in the power consuming device, and is, for example, a power distribution unit (PDU) used in a new energy vehicle. The function of the PDU is to be responsible for power distribution and management of a high-voltage circuit in the new energy vehicle to provide the entire vehicle with charging and discharging control, electrical control on high-voltage elements, circuit overload and short-circuit protection, high-voltage sampling, low-voltage control, and the like, thereby protecting and monitoring the running of a high-voltage system. The high-voltage power distribution box may be alternatively an element that is used in a battery and is configured to control charging and discharging of the battery, for example, a battery disconnect unit (BDU). The BDU is a system that performs charging and discharging control on the battery, and is a high-voltage power distribution box specially designed for the battery.

The arrangement of electrical components in the power distribution apparatus is increasingly compact, to reduce the overall dimensions of the entire power distribution apparatus, thereby reducing a space occupied in the power consuming device and the battery, enhancing the structural compactness of the power consuming device, and lowing cost requirements. An electrical component in a power distribution apparatus usually includes an electrical connection structure used for electrically connecting to another electrical component. However, due to the compact arrangement of electrical components, a spacing between two electrical components is small, and a spacing between electrical connection structures of the two electrical components is small. As a result, the insulativity between the electrical connection structures of the two electrical components is poor, and in a high-voltage state, a short-circuit is likely to occur between the electrical connection structures of the two electrical components, compromising the use reliability of the power distribution apparatus.

To enhance the insulativity between electrical connection structures of two electrical components in a power distribution apparatus, embodiments of this application provide a power distribution apparatus. The power distribution apparatus includes a first electrical component and a second electrical component. The first electrical component includes a first electrical connection structure. The second electrical component includes a second electrical connection structure. The first electrical connection structure and the second electrical connection structure are spaced apart. An insulating member is provided between the first electrical connection structure and the second electrical connection structure. The insulating member can enhance the insulation performance between the first electrical connection structure and the second electrical connection structure, thereby enhancing the insulativity between electrical connection structures of two electrical components, reducing a short circuit risk, and enhancing the use reliability of the power distribution apparatus.

For the power distribution apparatus, the battery, and the power consuming device provided in the embodiments of this application, from the perspective of market trends, the applications of batteries are becoming increasingly widespread. The batteries are used in energy storage power systems such as water power plants, fire power plants, wind power plants, and solar power plants, and are also widely used in electric mobility devices such as electric bicycles, electric motorcycles, electric vehicles, as well as in military equipment, aerospace, and other fields. With continuous expansion of application fields of traction batteries, market demands for traction batteries are also expanding. Power consuming devices may include, but are not limited to, mobile phones, tablet computers, laptop computers, electric toys, electric tools, electric scooters, electric vehicles, ships, spacecraft, and the like. The electric toys may include stationary or mobile electric toys, for example, game consoles, electric vehicle toys, electric ship toys, and electric aircraft toys. The spacecraft may include airplanes, rockets, space shuttles, spaceships, and the like.

For ease of description in the following embodiments, an example in which a power consuming device in an embodiment of this application is a vehicle 1000 is used for description.

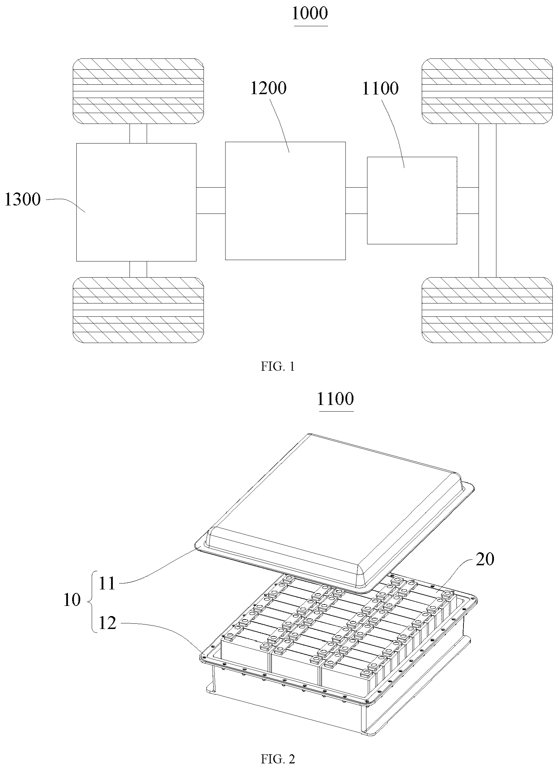

Referring to FIG. 1, the vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery 1100. The battery 1100 may be disposed at the bottom, head, or tail of the vehicle 1000. The battery 1100 may be configured to supply power to the vehicle 1000. For example, the battery 1100 may be used as a power supply for operating the vehicle 1000. The vehicle 1000 may further include a controller 1200 and a motor 1300. The controller 1200 is configured to control the battery 1100 to supply power to the motor 1300, for example, to meet working power requirements during starting, navigation, and traveling of the vehicle 1000.

In some embodiments of this application, the battery 1100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, as an embodiment of the battery 1100, the battery 1100 includes a housing 10 and battery cells 20, where the battery cells 20 are accommodated in the housing 10. The housing 10 is configured to provide an accommodating space for the battery cells 20. The housing 10 may use a variety of structures. In some embodiments, the housing 10 may include a first part 11 and a second part 12, the first part 11 and the second part 12 cover each other, and the first part 11 and the second part 12 jointly define the accommodating space for accommodating the battery cells 20. The second part 12 may be a hollow structure with an opening at one end, the first part 11 may be a plate-like structure, and the first part 11 covers an opening side of the second part 12, so that the first part 11 and the second part 12 jointly define the accommodating space. Alternatively, the first part 11 and the second part 12 each may be a hollow structure with an opening on one side, and an opening side of the first part 11 covers an opening side of the second part 12. Certainly, the housing 10 formed by the first part 11 and the second part 12 may be in various shapes, such as a cylinder, and a cuboid.

In the battery 1100, there may be a plurality of battery cells 20, and the plurality of battery cells 20 can be connected in series, parallel, or series-parallel. Series-parallel connection means that both series connection and parallel connection exist among the plurality of battery cells 20.

In an example, the plurality of battery cells 20 may be directly connected in series, parallel, or series-parallel together, and then the whole formed by the plurality of battery cells 20 may be accommodated in the housing 10. Certainly, the battery 1100 may be alternatively in the form of a battery module formed by the plurality of battery cells 20 that are first connected in series, parallel, or series-parallel. A plurality of battery modules are then connected in series, parallel, or series-parallel to form a whole and accommodated in the housing 10. The battery 1100 may also include other structures, for example, the battery 1100 may also include a bus element for achieving the electrical connection between the plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat-shaped, cuboid-shaped, or of another shape.

As another embodiment of the battery 1100, the battery 1100 may not include the housing 10. Instead, the plurality of battery cells 20 are electrically connected, and form a whole through a necessary fixing structure to be assembled in the power consuming device.

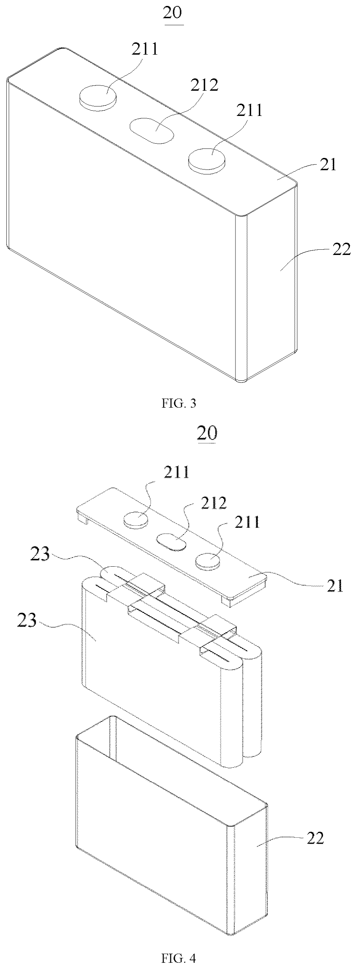

Referring to FIG. 3 and FIG. 4, a battery cell 20 is a smallest unit forming a battery. As shown in FIG. 3, the battery cell 20 includes an end cover 21, a case 22, an electrode assembly 23, and other functional elements.

The end cover 21 refers to an element that covers an opening of the case 22 to isolate an internal environment of the battery cell 20 from an external environment. A shape of the end cover 21 is not limited and may be adapted to a shape of the case 22 to fit the case 22. Optionally, the end cover 21 may be made of a material with specified hardness and strength (for example, aluminum alloy), so that the end cover 21 is less likely to deform under extrusion and collision, enabling the battery cell 20 to have a higher structural strength and enhanced safety performance. Functional elements such as electrode terminals 211 may be arranged on the end cover 21. The electrode terminals 211 may be configured to electrically connect to the electrode assembly 23 to output or input electrical energy of the battery cell 20. In some embodiments, the end cover 21 may also be provided with a pressure relief mechanism 212 configured to relieve internal pressure when the internal pressure or temperature in the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulating element may also be arranged on an inner side of the end cover 21. The insulating element can be configured to isolate electrical connection elements in the case 22 from the end cover 21, thereby reducing a risk of short circuit. For example, the insulating element may be made of plastic, rubber, or the like.

The case 22 is an assembly configured to form an internal environment of the battery cells 20 together with the end cover 21, where the formed internal environment may be configured to accommodate the electrode assembly 23, an electrolyte solution, and other elements. The case 22 and the end cover 21 may be separate elements, an opening may be provided in the case 22, and the end cover 21 covers the opening to form the internal environment of the battery cell 20. Without limitation, the end cover 21 and the case 22 may also be integrated. Specifically, the end cover 21 and the case 22 may form a shared connection surface before other elements are arranged inside the case, and then the end cover 21 covers the case 22 when the inside of the case 22 needs to be enclosed. The case 22 may be of various shapes and sizes, such as a rectangular shape, a cylindrical shape, and a hexagonal prism shape. Specifically, the shape of the case 22 may be determined based on a specific shape and size of the electrode assembly 23. The case 22 may be made of various materials, such as copper, iron, aluminum, stainless steel, aluminum alloy, and plastic, which are not particularly limited in the embodiments of this application.

The electrode assembly 23 is an element in the battery cell 20 that undergoes electrochemical reactions. The case 22 may include one or more electrode assemblies 23. The electrode assembly 23 includes a positive electrode member, a negative electrode member, and a separator member. During charging and discharging of the battery cell, active ions (for example, lithium ions) are intercalated and deintercalated back and forth between the positive electrode member and the negative electrode member. The separator member is arranged between the positive electrode member and the negative electrode member, and can prevent a short circuit between the positive electrode member and the negative electrode member and allow active ions to pass through.

In some embodiments, the positive electrode member may be a positive electrode plate, and the positive electrode plate includes a positive electrode current collector and a positive electrode active material arranged on at least one surface of the positive electrode current collector.

In some embodiments, the negative electrode member may be a negative electrode plate, and the negative electrode plate includes a negative electrode current collector and a negative electrode active material arranged on at least one surface of the negative electrode current collector.

In some embodiments, the separator member is a separator. The type of the separator is not particularly limited in this application, and any well-known separator with a porous structure having good chemical stability and mechanical stability may be selected.

In some embodiments, the electrode assembly 23 is a wound structure. The positive electrode plate and the negative electrode plate are wound into wound structures.

In some embodiments, the electrode assembly 23 is a laminated structure.

In some embodiments, the power distribution apparatus 100 may be configured to control the distribution and management of electrical energy provided by the battery 1100 to the controller 1200 and the motor 1300, thereby assisting in the running of the vehicle 1000. The power distribution apparatus 100 may further be configured to control the charging and discharging of the battery cell 20 in the battery 1100. The power distribution apparatus 100 may be mounted inside the housing 10, or may be mounted outside the housing 10.

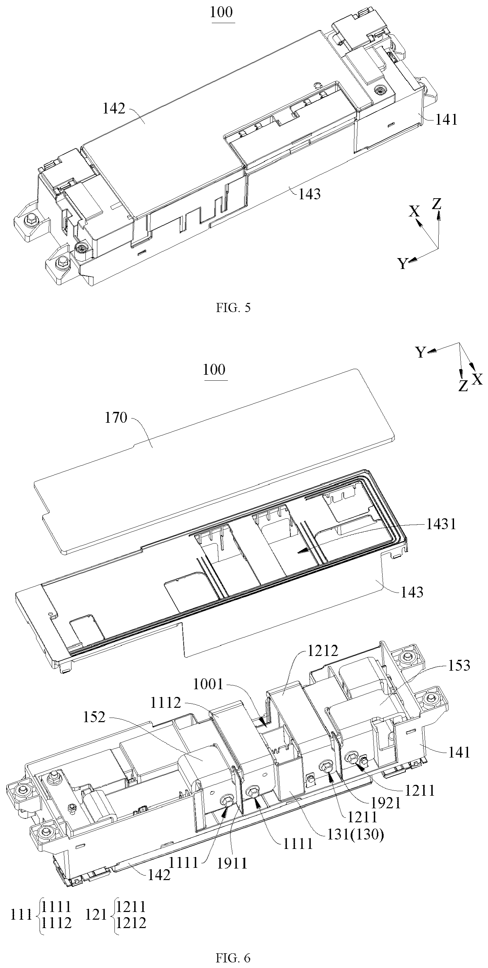

In an embodiment of this application, with reference to FIG. 5 to FIG. 8, a power distribution apparatus 100 is provided. The power distribution apparatus 100 includes a first electrical component 110 and a second electrical component 120. The first electrical component 110 includes a first electrical connection structure 111. The second electrical component 120 includes a second electrical connection structure 121. The first electrical connection structure 111 and the second electrical connection structure 121 are spaced apart. An insulating member 130 is provided between the first electrical connection structure 111 and the second electrical connection structure 121.

A plurality of electrical components are usually disposed in the power distribution apparatus 100. The electrical components may include, but are not limited to, relays, fuses, resistors, and current sensors. The first electrical component 110 may be one electrical component in the power distribution apparatus 100, or may be an electrical module that integrates a plurality of electrical components in the power distribution apparatus 100. The second electrical component 120 may be another electrical component or electrical module other than the first electrical component 110 in the power distribution apparatus 100. Specifically, one of two adjacent electrical components in the power distribution apparatus 100 is the first electrical component 110, and the other is the second electrical component 120.

The first electrical connection structure 111 may be an electrical connection structure of the first electrical component 110 that is connected to another electrical component. The another electrical component may be the second electrical component 120, or may be an electrical component other than the first electrical component 110 and the second electrical component 120 in the power distribution apparatus 100, or may be an electrical component outside the power distribution apparatus 100. The first electrical connection structure 111 is made of a conductive material, for example, copper, aluminum, or another conductive metal, thereby meeting electrical conduction requirements.

The second electrical connection structure 121 may be a connection structure that is led out from the second electrical component 120 and is connected to another electrical component. The another electrical component may be the first electrical component 110, or may be an electrical component other than the first electrical component 110 and the second electrical component 120 in the power distribution apparatus 100, or may be an electrical component outside the power distribution apparatus 100. The second electrical connection structure 121 is made of a conductive material, for example, copper, aluminum, or another conductive metal, thereby meeting electrical conduction requirements.

The insulating member 130 may be an element made of an insulating material. The insulating material may be, but is not limited to, insulating plastics such as polypropylene (PP), polyethylene (PE), and polyvinyl chloride (PVC).

The first electrical connection structure 111 and the second electrical connection structure 121 are spaced apart. It may be understood that a gap is formed between the first electrical connection structure 111 and the second electrical connection structure 121, so that the first electrical connection structure 111 and the second electrical connection structure 121 are kept from being in contact, thereby reducing a short circuit risk.

The insulating member 130 is provided between the first electrical connection structure 111 and the second electrical connection structure 121. It may be understood that the insulating member 130 is located between the first electrical connection structure 111 and the second electrical connection structure 121, i.e., the insulating member 130 is located in the gap formed between the first electrical connection structure 111 and the second electrical connection structure 121. The insulating member 130 may insulate the first electrical connection structure 111 from the second electrical connection structure 121, thereby enhancing the insulativity between the first electrical connection structure 111 and the second electrical connection structure 121.

For the power distribution apparatus 100 in the embodiments of this application, in the first electrical component 110 and the second electrical component 120, the insulating member 130 is provided between the first electrical connection structure 111 of the first electrical component 110 and the second electrical connection structure 121 of the second electrical component 120, and the first electrical connection structure 111 and the second electrical connection structure 121 are insulated by the insulating member 130, so that the insulation performance between the first electrical connection structure 111 and the second electrical connection structure 121 can be enhanced, i.e., the insulativity between electrical connection structures of two electrical components is enhanced, thereby reducing a short circuit risk, and enhancing the use reliability of the power distribution apparatus 100.

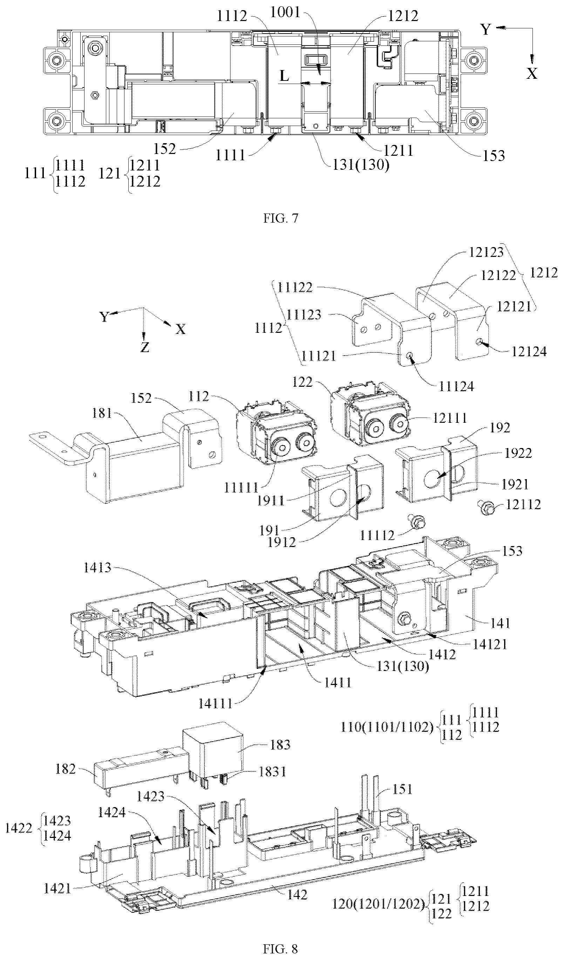

In another embodiment of this application, with reference to FIG. 7, the insulating member 130 is provided at a position with the shortest distance between the first electrical connection structure 111 and the second electrical connection structure 121.

In a case that a spacing at any position between the first electrical connection structure 111 and the second electrical connection structure 121 is the same, the position with the shortest distance between the first electrical connection structure 111 and the second electrical connection structure 121 may be any position between the first electrical connection structure 111 and the second electrical connection structure 121. In a case that spacings at different positions between the first elec trical connection structure 111 and the second electrical connection structure 121 are different, the position with the shortest distance between the first electrical connection structure 111 and the second electrical connection structure 121 may be a position wi th the minimum spacing between the first electrical connection structure 111 and the second electrical connection structure 121.

Through the use of the technical solution in this embodiment, a creepage distance at the position with the shortest distance between the first electrical connection structure 111 and the second electrical connection structure 121 is minimum, the insulativity of the position with the shortest distance between the first electrical connection structure 111 and the second electrical connection structure 121 is poor, and a short circuit risk is high. The insulating member 130 is provided at the position with the shortest distance between the first electrical connection structure 111 and the second electrical connection structure 121, so that the insulativity at the position can be effectively enhanced, thereby effectively reducing a short circuit risk between electrical connection structures of two electrical components, and effectively enhancing the use reliability of the power distribution apparatus 100.

In another embodiment of this application, with reference to FIG. 7, a spacing at the position with the shortest distance between the first electrical connection structure 111 and the second electrical connection structure 121 ranges from 3 millimeters (mm) to 9 mm.

When the spacing L at the position with the shortest distance between the first electrical connection structure 111 and the second electrical connection structure 121 is smaller, a short circuit is more likely to occur.

Through the use of the technical solution in this embodiment, the spacing L at the position with the shortest distance between the first electrical connection structure 111 and the second electrical connection structure 121 ranges from 3 mm to 9 mm, and a short circuit is likely to occur. The insulating member 130 is provided at the position with the shortest distance between the first electrical connection structure 111 and the second electrical connection structure 121, so that the insulativity between the first electrical connection structure 111 and the second electrical connection structure 121 can be effectively enhanced, thereby effectively reducing a short circuit risk. In addition, a large mounting space can further be provided for the insulating member 130 between the first electrical connection structure 111 and the second electrical connection structure 121. In this way, the insulating member 130 with a large size can be disposed, so that the insulating member 130 can adequately insulate the first electrical connection structure 111 from the second electrical connection structure 121.

In another embodiment of this application, with reference to FIG. 7, the spacing at the position with the shortest distance between the first electrical connection structure 111 and the second electrical connection structure 121 ranges from 3 mm to 6 mm.

Through the use of the technical solution in this embodiment, the spacing L at the position with the shortest distance between the first electrical connection structure 111 and the second electrical connection structure 121 ranges from 3 mm to 6 mm, and a short circuit is more likely to occur. The insulating member 130 is provided at the position with the shortest distance between the first electrical connection structure 111 and the second electrical connection structure 121, so that the insulativity between the first electrical connection structure 111 and the second electrical connection structure 121 can be effectively enhanced, thereby effectively reducing a short circuit risk. In addition, a large mounting space can further be provided for the insulating member 130 between the first electrical connection structure 111 and the second electrical connection structure 121. In this way, the insulating member 130 with a large size can be disposed, so that the insulating member 130 can adequately insulate the first electrical connection structure 111 from the second electrical connection structure 121.

In an embodiment, the spacing L at the position with the shortest distance between the first electrical connection structure 111 and the second electrical connection structure 121 may be, but is not limited to, 3 mm, 4 mm, 5 mm, 6 mm, 7 mm, 8 mm, or 9 mm.

In another embodiment of this application, with reference to FIG. 7, the first electrical connection structure 111 includes a first terminal 1111 and a first electrical connection member 1112. The first electrical connection member 1112 is electrically connected to the first terminal 1111. The second electrical connection structure 121 includes a second terminal 1211 and a second electrical connection member 1212. The second electrical connection member 1212 is electrically connected to the second terminal 1211. In a case that the position with the shortest distance between the first electrical connection structure 111 and the second electrical connection structure 121 is located between the first terminal 1111 and the second terminal 1211, the insulating member 130 is provided between the first terminal 1111 and the second terminal 1211. In a case that the position with the shortest distance between the first electrical connection structure 111 and the second electrical connection structure 121 is located between the first electrical connection member 1112 and the second electrical connection member 1212, the insulating member 130 is provided between the first electrical connection member 1112 and the second electrical connection member 1212.

The first terminal 1111 may be a terminal that is led out from the first electrical component 110 and is electrically connected to another electrical component. The first electrical connection member 1112 may be a conductive element that electrically connects the first terminal 1111 and another electrical component. Both the first terminal 1111 and the first electrical connection member 1112 are made of a conductive material, for example, copper, aluminum, or another conductive metal.

The second terminal 1211 may be a terminal that is led out from the second electrical component 120 and is electrically connected to another electrical component. The second electrical connection member 1212 may be a conductive element that electrically connects the second terminal 1211 and another electrical component. Both the second terminal 1211 and the second electrical connection member 1212 are made of a conductive material, for example, copper, aluminum, or another conductive metal.

In a case that the position with the shortest distance between the first electrical connection structure 111 and the second electrical connection structure 121 is located between the first terminal 1111 and the second terminal 1211, the insulating member 130 is provided between the first terminal 1111 and the second terminal 1211. It may be understood that a spacing between the first electrical connection member 1112 and the second electrical connection member 1212, a spacing between the first electrical connection member 1112 and the second terminal 1211, and a spacing between the first terminal 1111 and the second electrical connection member 1212 are all greater than a spacing between the first terminal 1111 and the second terminal 1211, i.e., the spacing between the first terminal 1111 and the second terminal 1211 is equal to the minimum spacing between the first electrical connection structure 111 and the second electrical connection structure 121, and the insulating member 130 is located at the minimum spacing. In this way, the insulativity between the first electrical connection structure 111 and the second electrical connection structure 121 can be effectively enhanced, thereby effectively reducing a short circuit risk between the first electrical connection structure 111 and the second electrical connection structure 121, and enhancing the use reliability of the power distribution apparatus 100.

In a case that the position with the shortest distance between the first electrical connection structure 111 and the second electrical connection structure 121 is located between the first electrical connection member 1112 and the second electrical connection member 1212, the insulating member 130 is provided between the first electrical connection member 1112 and the second electrical connection member 1212. It may be understood that a spacing between the first terminal 1111 and the second terminal 1211, a spacing between the first electrical connection member 1112 and the second terminal 1211, and a spacing between the first terminal 1111 and the second electrical connection member 1212 are all greater than a spacing between the first electrical connection member 1112 and the second electrical connection member 1212, i.e., the spacing between the first electrical connection member 1112 and the second electrical connection member 1212 is equal to the minimum spacing between the first electrical connection structure 111 and the second electrical connection structure 121, and the insulating member 130 is located at the minimum spacing. In this way, the insulativity between the first electrical connection structure 111 and the second electrical connection structure 121 can be effectively enhanced, thereby effectively reducing a short circuit risk between the first electrical connection structure 111 and the second electrical connection structure 121, and enhancing the use reliability of the power distribution apparatus 100.

Through the use of the technical solution in this embodiment, the insulating member 130 is provided at the position with the shortest distance between the first electrical connection structure 111 and the second electrical connection structure 121. In this way, the insulativity between the first electrical connection structure 111 and the second electrical connection structure 121 can be effectively enhanced, thereby effectively reducing a short circuit risk between the first electrical connection structure 111 and the second electrical connection structure 121, and enhancing the use reliability of the power distribution apparatus 100.

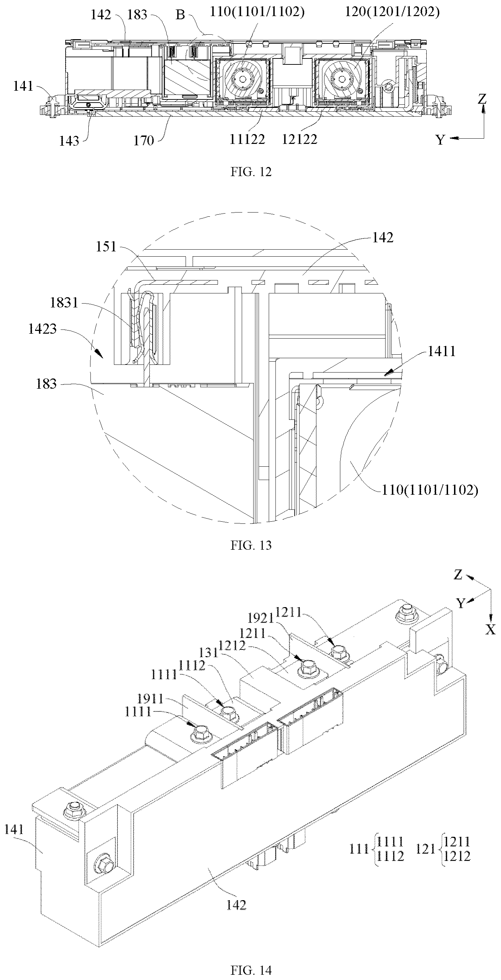

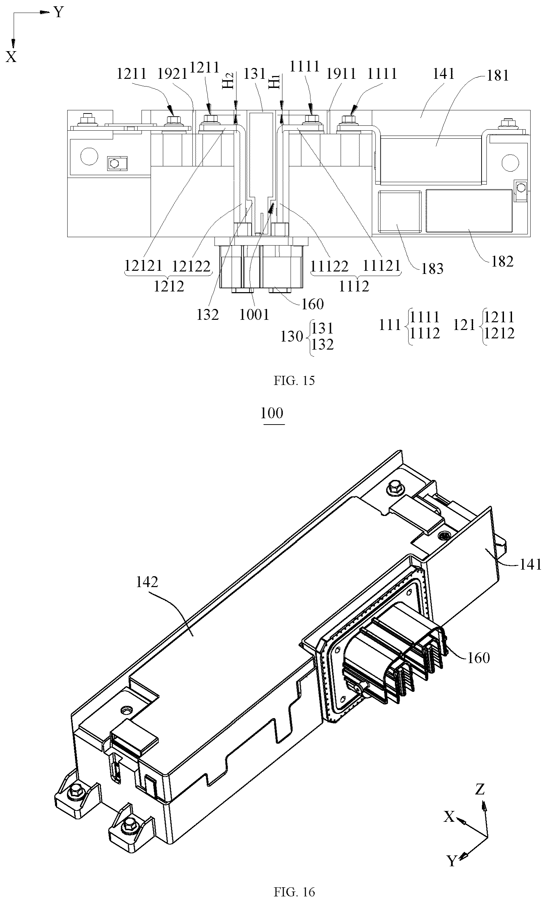

In another embodiment of this application, with reference to FIG. 14 and FIG. 15, the first electrical connection structure 111 includes the first terminal 1111 and the first electrical connection member 1112. The first electrical connection member 1112 is electrically connected to the first terminal 1111. The second electrical connection structure 121 includes the second terminal 1211 and the second electrical connection member 1212. The second electrical connection member 1212 is electrically connected to the second terminal 1211. The insulating member 130 is provided between the first terminal 1111 and the second terminal 1211. The insulating member 130 is provided between the first electrical connection member 1112 and the second electrical connection member 1212.

Through the use of the technical solution in this embodiment, the insulating members 130 are provided between the first terminal 1111 and the second terminal 1211 and between the first electrical connection member 1112 and the second electrical connection member 1212. In this way, the first electrical connection structure 111 and the second electrical connection structure 121 can be adequately isolated, thereby further effectively enhancing the insulativity between the first electrical connection structure 111 and the second electrical connection structure 121, and providing better use reliability of the power distribution apparatus 100.

In another embodiment of this application, the first electrical component 110 is a first relay 1101. The first terminal 1111 is a connection terminal led out from a contact of the first relay 1101. The second electrical component 120 is a second relay 1201. The second terminal 1211 is a connection terminal led out from a contact of the second relay 1201.

The relay in the power distribution apparatus 100 is usually disposed in a high-voltage circuit. The relay may be an electrical component configured to control on or off of the circuit. Specifically, the relay includes an electromagnet, a coil, a contact, among other elements. When an input quantity (for example, a voltage, a current, or a temperature) of an input coil reaches a specified value, the electromagnet moves under the action of the magnetic force of the coil, and the electromagnet moves to drive the contact to move, to cause a change to an on or off state of the controlled high-voltage circuit. The high-voltage circuit in which the relay is located has a high voltage, causing a high short-circuit risk to the electrical connection structure led out from the relay in the power distribution apparatus 100.

The first relay 1101 may be one relay in the power distribution apparatus 100, and the second relay 1201 may be another relay in the power distribution apparatus 100. Specifically, the first relay 1101 may be a main positive relay 1102, and the main positive relay 1102 is a relay configured to control on or off of a main positive circuit in the high-voltage circuit. The second relay 1201 may be a main negative relay 1202, and the main negative relay 1202 is a relay configured to control on or off of a main negative circuit in the high-voltage circuit.

The first terminal 1111 is a connection terminal led out from the contact of the first relay 1101. It may be understood that in a case that the first electrical component 110 is the first relay 1101, the first terminal 1111 may be a connection terminal electrically connected to the contact of the first relay 1101. The connection terminal is configured to be connected to the high-voltage circuit, and controls on or off of the high-voltage circuit through the opening and closing of the contact. For example, the first terminal 1111 includes a first electrical connection portion 11111 and a first bolt 11112, and the first electrical connection member 1112 is fixed to the first electrical connection portion 11111 by the first bolt 11112, thereby implementing the electrical connection between the first terminal 1111 and the first electrical connection member 1112. The first electrical connection portion 11111 may be a conducive element led out from the contact of the first relay 1101, and the first electrical connection portion 11111 and the first bolt 11112 may be made of copper, aluminum, or another conductive material.

The second terminal 1211 is a connection terminal led out from the contact of the second relay 1201. It may be understood that in a case that the second electrical component 120 is the second relay 1201, the second terminal 1211 may be a connection terminal electrically connected to the contact of the second relay 1201. The connection terminal is configured to be connected to the high-voltage circuit, and controls on or off of the high-voltage circuit through the opening and closing of the contact. For example, the second terminal 1211 includes a second electrical connection portion 12111 and a second bolt 12112, and the second electrical connection member 1212 is fixed to the second electrical connection portion 12111 by the second bolt 12112, thereby implementing the electrical connection between the second terminal 1211 and the second electrical connection member 1212. The second electrical connection portion 12111 may be a conducive element led out from the contact of the second relay 1201, and the second electrical connection portion 12111 and the second bolt 12112 may be made of copper, aluminum, or another conductive material.

Through the use of the technical solution in this embodiment, the insulating member 130 is provided between the connection terminal led out from the contact of the first relay 1101 and the connection terminal led out from the contact of the second relay 1201 in the power distribution apparatus 100. A short circuit risk between the first relay 1101 and the second relay 1201 in the power distribution apparatus 100 can be reduced, thereby effectively reducing a short circuit risk of the power distribution apparatus 100, and enhancing the use reliability of the power distribution apparatus 100.

In another embodiment of this application, with reference to FIG. 7 and FIG. 8, the power distribution apparatus 100 further includes a mounting base 141. The mounting base 141 is constructed with a first accommodating cavity 1411 and a second accommodating cavity 1412. The first relay 1101 further includes a first switch unit 112. The first switch unit 112 is electrically connected to the first terminal 1111. The first switch unit 112 is exposed from the first accommodating cavity 1411. The second relay 1201 includes a second switch unit 122. The second switch unit 122 is electrically connected to the second terminal 1211. The second switch unit 122 is exposed from the second accommodating cavity 1412.

The mounting base 141 may be a mounting base body for the first relay 1101 and the second relay 1201 and achieves the function of supporting the first relay 1101 and the second relay 1201. The mounting base 141 is usually made of an insulating material, thereby implementing the insulation and protection for electrical components in the power distribution apparatus 100. The insulating material may be, but is not limited to, insulating plastics such as polypropylene (preprocess), polyethylene (pedestal), and polyvinyl chloride (PVC). The first relay 1101 may be connected to the mounting base 141 by, but not limited to, snapping, clipping, screwing, bonding, or integrated injection molding. The second relay 1201 may be connected to the mounting base 141 by, but not limited to, snapping, clipping, screwing, bonding, or integrated injection molding.

The first accommodating cavity 1411 may be a chamber of the mounting base 141 that is configured to accommodate the first relay 1101, and the second accommodating cavity 1412 may be a chamber of the mounting base 141 that is configured to accommodate the second relay 1201. The first switch unit 112 may be a main element in the first relay 1101 that performs switching control, i.e., a unit formed by components such as the electromagnet, the coil, and the contact in the first relay 1101 with the case removed. The first terminal 1111 is electrically connected to the first switch unit 112, and the first switch unit 112 is electrically connected to the first electrical connection member 1112 by the first terminal 1111, thereby implementing the electrical connection between the first electrical component 110 and another electrical component.

The first switch unit 112 is exposed from the first accommodating cavity 1411. It may be understood that the first switch unit 112 is not covered with a case, but instead is directly exposed from the first accommodating cavity 1411, i.e., a cavity wall of the first accommodating cavity 1411 may be directly used as a case of the first relay 1101, i.e., the first electrical component 110 is a relay with a case removed. The mounting base 141 and the case of the first relay 1101 are an integrally formed structure, thereby reducing manufacturing costs.

The second switch unit 122 may be a main element in the second relay 1201 that performs switching control, i.e., a unit formed by elements such as the electromagnet, the coil, and the contact in the second relay 1201 with the case removed. The second terminal 1211 is electrically connected to the second switch unit 122, and the second switch unit 122 is electrically connected to the second electrical connection member 1212 by the second terminal 1211, thereby implementing the electrical connection between the second electrical component 120 and another electrical component.

The second switch unit 122 is exposed from the second accommodating cavity 1412. It may be understood that the second switch unit 122 is not covered with a case, but instead is directly exposed from the second accommodating cavity 1412, i.e., a cavity wall of the second accommodating cavity 1412 may be directly used as a case of the second relay 1201, i.e., the second electrical component 120 is a relay with a case removed. The mounting base 141 and the case of the second relay 1201 are an integrally formed structure, thereby reducing manufacturing costs.

Through the use of the technical solution in this embodiment, the first switch unit 112 of the first relay 1101 is directly exposed from the first accommodating cavity 1411, and the second switch of the second relay 1201 is directly exposed from the second accommodating cavity 1412. In this way, in the power distribution apparatus 100, a space occupied by a case of the first relay 1101 and a case of the second relay 1201 can be avoided, thereby enhancing the structural compactness of the power distribution apparatus 100, reducing the overall dimensions of the power distribution apparatus 100, enhancing the performance of the power distribution apparatus 100, reducing manufacturing costs, and also reducing a spacing between the first electrical connection structure 111 and the second electrical connection structure 121. In addition, the first relay 1101 and the second relay 1201 are usually elements with large sizes in the power distribution apparatus 100. As the case of the first relay 1101 and the case of the second relay 1201 are omitted, a large space can be reserved for the power distribution apparatus 100, thereby effectively enhancing the structural compactness of the power distribution apparatus 100.

In another embodiment of this application, with reference to FIG. 7 and FIG. 8, the first accommodating cavity 1411 is provided with a first opening 14111. The second accommodating cavity 1412 is provided with a second opening 14121. The first opening 14111 and the second opening 14121 are located on a same side of the mounting base 141. The first terminal 1111 protrudes from the first opening 14111. The second terminal 1211 protrudes from the second opening 14121.

The first opening 14111 may be an opening of the mounting base 141 that is in communication with the first accommodating cavity 1411.

The second opening 14121 may be an opening of the mounting base 141 that is in communication with the second accommodating cavity 1412.

The first opening 14111 and the second opening 14121 are located on the same side of the mounting base 141. It may be understood that the first opening 14111 and the second opening 14121 are located on the same side of the mounting base 141

The first terminal 1111 protrudes from the first opening 14111. It may be understood that the first terminal 1111 protrudes from the first opening 14111 to expose the first opening 14111.

The second terminal 1211 protrudes from the second opening 14121. It may be understood that the second terminal 1211 protrudes from the second opening 14121 to expose the second opening 14121.

Through the use of the technical solution in this embodiment, the first terminal 1111 and the second terminal 1211 respectively protrude from the first opening 14111 and the second opening 14121, thereby facilitating the electrical connection between the first terminal 1111 and the first electrical connection member 1112 and the electrical connection between the second terminal 1211 and the second electrical connection member 1212. In addition, the first opening 14111 and the second opening 14121 are located on the same side of the mounting base 141. In this way, the first electrical connection member 1112 and the second electrical connection member 1212 can be electrically mounted on the same side, so that the assembly operations of the power distribution apparatus 100 are simple, thereby enhancing the production efficiency of the power distribution apparatus 100.

In another embodiment, with reference to FIG. 14 and FIG. 15, in a case that the insulating member 130 is provided between the first terminal 1111 and the second terminal 1211, the insulating member 130 located between the first terminal 1111 and the second terminal 1211 is a first insulating member 131. A projection of the first insulating member 131 in a first direction covers a projection of a portion of the first terminal 1111 that protrudes from the first opening 14111 in the first direction, and the first direction is a distribution direction of the first terminal 1111 and the second terminal 1211. In addition/Alternatively, the projection of the first insulating member 131 in the first direction covers a projection of a portion of the second terminal 1211 that protrudes from the second opening 14121 in the first direction, and the first direction is the distribution direction of the first terminal 1111 and the second terminal 1211.

The first direction is the distribution direction of the first terminal 1111 and the second terminal 1211. It may be understood that the first direction may be a direction pointing from the first terminal 1111 to the second terminal 1211. Specifically, a straight line passing through a central point of the first terminal 1111 and a central point of the second terminal 1211 is defined. An extension direction of the straight line is the first direction. For example, the first direction may be a Y direction in FIG. 7.

A plane perpendicular to the first direction is defined as a projection plane. A first projection image is obtained by projecting the first insulating member 131 onto the projection plane in the first direction. The first projection image is the projection of the first insulating member 131 in the first direction. A second projection image is obtained by projecting the portion of the first terminal 1111 that protrudes from the first opening 14111 onto the projection plane in the first direction. The second projection image may be the projection of the portion of the first terminal 1111 that protrudes from the first opening 14111 in the first direction. A third projection image is obtained by projecting the portion of the second terminal 1211 that protrudes from the second opening 14121 onto the projection plane in the first direction. The third projection image may be the projection of the portion of the second terminal 1211 that protrudes from the second opening 14121 in the first direction. For example, an image obtained by projecting the first insulating member 131 onto an XZ plane in the Y direction is the first projection image. An image obtained by projecting the portion of the first terminal 1111 that protrudes from the first opening 14111 onto the XZ plane in the Y direction is the second projection image. An image obtained by projecting the portion of the second terminal 1211 that protrudes from the second opening 14121 onto the XZ plane in the Y direction is the third projection image.

The projection of the first insulating member 131 in the first direction covers the projection of the portion of the first terminal 1111 that protrudes from the first opening 14111 in the first direction. It may be understood that the second projection image is located in the first projection image, or an edge of the first projection image overlaps an edge of the second projection image.

The projection of the first insulating member 131 in the first direction covers the projection of the portion of the second terminal 1211 that protrudes from the second opening 14121 in the first direction. It may be understood that the third projection image is located in the first projection image, or an edge of the first projection image overlaps an edge of the third projection image.

In an embodiment, the projection of the first insulating member 131 in the first direction covers the projection of the portion of the first terminal 1111 that protrudes from the first opening 14111 in the first direction. The first direction is the distribution direction of the first terminal 1111 and the second terminal 1211, i.e., as seen from the first insulating member 131 to the first terminal 1111 in the first direction, the first insulating member 131 can fully cover the portion of the first terminal 1111 that protrudes from the first opening 14111, so that the first terminal 1111 and the second terminal 1211 are adequately insulated, and a short circuit risk is low, thereby enhancing the use reliability of the power distribution apparatus 100.

In an embodiment, the projection of the first insulating member 131 in the first direction covers the projection of the portion of the second terminal 1211 that protrudes from the second opening 14121 in the first direction. The first direction is the distribution direction of the first terminal 1111 and the second terminal 1211, i.e., as seen from the first insulating member 131 to the second terminal 1211 in the first direction, the first insulating member 131 can fully cover the portion of the second terminal 1211 that protrudes from the second opening 14121, and the first insulating member 131 can fully cover the portion of the first terminal 1111 that protrudes from the first opening 14111, so that the first terminal 1111 and the second terminal 1211 are adequately insulated, and a short circuit risk is low, thereby enhancing the use reliability of the power distribution apparatus 100.

In an embodiment, the projection of the first insulating member 131 in the first direction covers the projection of the portion of the first terminal 1111 that protrudes from the first opening 14111 in the first direction. The projection of the first insulating member 131 in the first direction covers the projection of the portion of the second terminal 1211 that protrudes from the second opening 14121 in the first direction. The first direction is the distribution direction of the first terminal 1111 and the second terminal 1211, i.e., as seen from the first insulating member 131 to the first terminal 1111 in the first direction, the first insulating member 131 can fully cover the portion of the first terminal 1111 that protrudes from the first opening 14111, and as seen from the first insulating member 131 to the second terminal 1211 in the first direction, the first insulating member 131 can fully cover the portion of the second terminal 1211 that protrudes from the second opening 14121, so that the first terminal 1111 and the second terminal 1211 are fully isolated, the insulativity between the first terminal 1111 and the second terminal 1211 is better, and a short circuit risk is lower, thereby enhancing the use reliability of the power distribution apparatus 100.

Through the use of the technical solution in this embodiment, the first insulating member 131 may adequately isolate the first terminal 1111 from the second terminal 1211, so that the insulativity between the first terminal 1111 and the second terminal 1211 is adequate, and a short circuit risk is lower, thereby enhancing the use reliability of the power distribution apparatus 100.

In another embodiment of this application, with reference to FIG. 14 and FIG. 15, in a case that the insulating member 130 is provided between the first terminal 1111 and the second terminal 1211, the insulating member 130 located between the first terminal 1111 and the second terminal 1211 is the first insulating member 131, in a second direction, the first insulating member 131 is disposed protruding with respect to the first terminal 1111, the second direction intersects the first direction, and the first direction is the distribution direction of the first terminal 1111 and the second terminal 1211.

The second direction may be a direction intersecting the first direction. Specifically, the second direction may be another direction other than the first direction, i.e., the second direction is not parallel to the first direction. For example, the second direction may be an X direction or a Z direction in FIG. 14.

In the second direction, the first insulating member 131 is disposed protruding with respect to the first terminal 1111. It may be understood that the first insulating member 131 may protrude from a side of the first terminal 1111 in the second direction.

Through the use of the technical solution in this embodiment, in the second direction, the first insulating member 131 is disposed protruding with respect to the first terminal 1111, so that during creepage, a portion of the first insulating member 131 that protrudes with respect to the first terminal 1111 needs to be covered, and a creepage distance between the first terminal 1111 and the second terminal 1211 can be increased, thereby enhancing the insulating reliability between the first terminal 1111 and the second terminal 1211, and enhancing the use reliability of the power distribution apparatus 100.

In another embodiment of this application, with reference to FIG. 14 and FIG. 15, in the second direction, the first insulating member 131 is disposed protruding with respect to the second terminal 1211, the second direction intersects the first direction, and the first direction is the distribution direction of the first terminal 1111 and the second terminal 1211.

In the second direction, the first insulating member 131 is disposed protruding with respect to the second terminal 1211. It may be understood that the first insulating member 131 may protrude from a side of the second terminal 1211 in the second direction.

Through the use of the technical solution in this embodiment, in the second direction, the first insulating member 131 is disposed protruding with respect to the second terminal 1211, so that during creepage, a portion of the first insulating member 131 that protrudes with respect to the second terminal 1211 needs to be covered, and a creepage distance between the first terminal 1111 and the second terminal 1211 can be increased, thereby enhancing the insulating reliability between the first terminal 1111 and the second terminal 1211, and enhancing the use reliability of the power distribution apparatus 100.

In another embodiment of this application, with reference to FIG. 14 and FIG. 15, in the second direction, the first insulating member 131 is disposed protruding with respect to the first terminal 1111, the first insulating member 131 is disposed protruding with respect to the second terminal 1211, the second direction intersects the first direction, and the first direction is the distribution direction of the first terminal 1111 and the second terminal 1211.

Through the use of the technical solution in this embodiment, during creepage, the portions of the first insulating member 131 that protrudes with respect to the first terminal 1111 and the second terminal 1211 needs to be covered, and a creepage distance between the first terminal 1111 and the second terminal 1211 can be increased, thereby enhancing the insulating reliability between the first terminal 1111 and the second terminal 1211, and enhancing the use reliability of the power distribution apparatus 100.

In another embodiment of this application, with reference to FIG. 14 and FIG. 15, in a case that the first insulating member 131 is disposed protruding with respect to the first terminal 1111, a protrusion height of the first insulating member 131 with respect to the first terminal 1111 is H₁, where 5 mm ≤ H₁ ≤ 30 mm.

The protrusion height of the first insulating member 131 with respect to the first terminal 1111 is H₁. It may be understood that a dimension of the portion of the first insulating member 131 that protrudes from the first terminal 1111 in the second direction is H₁. For example, H₁ is a distance difference between a front end face of the first terminal 1111 and a front end face of the first insulating member 131 in the X direction.

Through the use of the technical solution in this embodiment, with the design of 5 mm ≤ H₁ ≤ 30 mm, a distance by which the first insulating member 131 protrudes from the first terminal 1111 is reasonable, so that a suitable creepage distance is provided between the first terminal 1111 and the second terminal 1211, and good insulativity is provided between the first terminal 1111 and the second terminal 1211. In addition, the dimensional design of the first insulating member 131 is reasonable with minimal redundancy and low costs, thereby also reducing the overall dimensions of the power distribution apparatus 100.

In an embodiment, a value of H₁ may be, but is not limited to, 5 mm, 7 mm, 9 mm, 11 mm, 13 mm, 14 mm, 17 mm, 19 mm, 21 mm, 23 mm, 25 mm, 27 mm, 29 mm or 30 mm.

In another embodiment of this application, with reference to FIG. 14 and FIG. 15, in a case that the first insulating member 131 is disposed protruding with respect to the second terminal 1211, a protrusion height of the first insulating member 131 with respect to the second terminal 1211 is H₂, where 5 mm ≤ H₂ ≤ 30 mm.

The protrusion height of the first insulating member 131 with respect to the second terminal 1211 is H₂. It may be understood that a dimension of the portion of the first insulating member 131 that protrudes from the second terminal 1211 in the second direction is H₂. For example, H₂ is a distance difference between a front end face of the second terminal 1211 and a front end face of a second insulating member 132 in the X direction.

Through the use of the technical solution in this embodiment, with the design of 5 mm ≤ H₂ ≤ 30 mm, a distance by which the first insulating member 131 protrudes from the second terminal 1211 is reasonable, so that a suitable creepage distance is provided between the first terminal 1111 and the second terminal 1211, and good insulativity is provided between the first terminal 1111 and the second terminal 1211. In addition, the dimensional design of the first insulating member 131 is reasonable with minimal redundancy and low costs, thereby also reducing the overall dimensions of the power distribution apparatus 100.

**In** another embodiment of this application, with reference to FIG. 14 and FIG. 15, the first insulating member 131 and the mounting base 141 are an integrally formed structure.

The first insulating member 131 and the mounting base 141 are an integrally formed structure. It may be understood that the first insulating member 131 and the mounting base 141 are an integrally formed structure obtained through integral molding. The integral molding is manufactured using an integral process such as extrusion, injection molding, and die casting.

Through the use of the technical solution in this embodiment, the first insulating member 131 and the mounting base 141 are an integrally formed structure, so that the connection reliability between the first insulating member 131 and the mounting base 141 is adequate, thereby enhancing the use reliability of the power distribution apparatus 100. In addition, the manufacturing of the first insulating member 131 and the mounting base 141 is simple, thereby enhancing the production effici ency.

In another embodiment of this application, with reference to FIG. 6 to FIG. 8, the power distribution apparatus 100 further includes a first insulating cover member 191, the first insulating cover member 191 covers the first opening 14111 and blocks the first opening 14111, and the first insulating cover member 191 is provided with a first through hole 1912, and the first terminal 1111 passes through the first through hole 1912. In addition/Alternatively, the power distribution apparatus 100 further includes a second insulating cover member 192, the second insulating cover member 192 covers the second opening 14121 and blocks the second opening 14121, and the second insulating cover member 192 is provided with a second through hole 1922, and the second terminal 1211 passes through the second through hole 1922.

The first insulating cover member 191 may be an element that covers the first opening 14111, and the first insulating cover member 191 blocks the first opening 14111, thereby insulating and protecting the first switch unit 112. The first insulating cover member 191 is usually made of an insulating material. The insulating material may be, but is not limited to, insulating plastics such as polypropylene (PP), polyethylene (PE), and polyvinyl chloride (PVC).

The second insulating cover member 192 may be an element that covers the second opening 14121, and the second insulating cover member 192 blocks the second opening 14121, thereby insulating and protecting the second switch unit 122. The second insulating cover member 192 is usually made of an insulating material. The insulating material may be, but is not limited to, insulating plastics such as polypropylene (PP), polyethylene (PE), and polyvinyl chloride (PVC).

The first through hole 1912 may be a through hole opened in the first insulating cover member 191, and the first through hole 1912 is configured to for the first terminal 1111 to pass through, so that the first terminal 1111 is exposed, thereby facilitating the electrical connection to the first electrical connection member 1112.

The second through hole 1922 may be a through hole opened in the second insulating cover member 192, and the second through hole 1922 is configured to for the second terminal 1211 to pass through, so that the second terminal 1211 is exposed, thereby facilitating the electrical connection to the second electrical connection member 1212.

In an embodiment, the first relay 1101 further includes the first insulating cover member 191, the first insulating cover member 191 covers the first opening 14111 and blocks the first opening 14111, the first insulating cover member 191 is provided with the first through hole 1912, and the first terminal 1111 passes through the first through hole 1912. The first insulating cover member 191 closes the first opening 14111, thereby insulating and protecting the first switch unit 112, and enhancing the use reliability of the power distribution apparatus 100.

In an embodiment, the second relay 1201 further includes the second insulating cover member 192, the second insulating cover member 192 covers the second opening 14121 and blocks the second opening 14121, and the second insulating cover member 192 is provided with the second through hole 1922, and the second terminal 1211 passes through the second through hole 1922. The second insulating cover member 192 closes the second opening 14121, thereby insulating and protecting the second switch unit 122, and enhancing the use reliability of the power distribution apparatus 100.

In an embodiment, the first relay 1101 further includes the first insulating cover member 191, the first insulating cover member 191 covers the first opening 14111 and blocks the first opening 14111, the first insulating cover member 191 is provided with the first through hole 1912, and the first terminal 1111 passes through the first through hole 1912. The second relay 1201 further includes the second insulating cover member 192, the second insulating cover member 192 covers the second opening 14121 and blocks the second opening 14121, and the second insulating cover member 192 is provided with the second through hole 1922, and the second terminal 1211 passes through the second through hole 1922. The first insulating cover member 191 and the second insulating cover member 192 close the first opening 14111 and the second opening 14121 respectively, thereby insulating and protecting the first switch unit 112 and the second switch unit 122, and enhancing the use reliability of the power distribution apparatus 100.

Through the use of the technical solution in this embodiment, the first insulating cover member 191 can close the first opening 14111, thereby insulating and protecting the first switch unit 112, and similarly, the second insulating cover member 192 can close the second opening 14121, thereby insulating and protecting the second switch unit 122, thereby enhancing the use reliability of the power distribution apparatus 100.

In another embodiment of this application, with reference to FIG. 6 to FIG. 8, in a case that the power distribution apparatus 100 includes the first insulating cover member 191, the first relay 1101 includes a plurality of first electrical connection structures 111, a first insulating isolation portion 1911 is disposed at a lateral portion of the first insulating cover member 191 that faces away from the first switch unit 112, and the first insulating isolation portion 1911 is located between two adjacent first electrical connection structures 111. In a case that the power distribution apparatus 100 includes the second insulating cover member 192, the first relay 1101 includes a plurality of second electrical connection structures 121, a second insulating isolation portion 1921 is disposed at a lateral portion of the second insulating cover member 192 that faces away from the second switch unit 122, and the second insulating isolation portion 1921 is located between two adjacent second electrical connection structures 121.

The first insulating isolation portion 1911 may be a portion of the first insulating cover member 191 that is located between two adjacent first electrical connection structures 111, and the first insulating isolation portion 1911 can insulate the two adjacent first electrical connection structures 111, thereby isolating the two adjacent first electrical connection structures 111.

The second insulating isolation portion 1921 may be a portion of the second insulating cover member 192 that is located between two adjacent second electrical connection structures 121, and the second insulating isolation portion 1921 can insulate the two adjacent second electrical connection structures 121, thereby isolating the two adjacent second electrical connection structures 121.

Through the use of the technical solution in this embodiment, the first insulating isolation portion 1911 insulates two adjacent first electrical connection structures 111, so that the insulation performance between the two adjacent first electrical connection structures 111 can be enhanced, thereby reducing a short circuit risk of the first relay 1101, further enhancing the use reliability of the first relay 1101, and enhancing the use reliability of the power distribution apparatus 100, and similarly, the second insulating isolation portion 1921 insulates two adjacent second electrical connection structures 121, so that the insulation performance between the two adjacent second electrical connection structures 121 can be enhanced, thereby reducing a short circuit risk of the second relay 1201, further enhancing the use reliability of the second relay 1201, and enhancing the use reliability of the power distribution apparatus 100.

In another embodiment of this application, with reference to FIG. 7 and FIG. 8, a mounting gap 1001 is formed between cavity walls of the first accommodating cavity 1411 and the second accommodating cavity 1412 that are opposite to each other.

It may be understood that the cavity walls of the first accommodating cavity 1411 and the second accommodating cavity 1412 that are opposite to each other are spaced apart with a gap formed, and the gap is the mounting gap 1001.

Through the use of the technical solution in this embodiment, the first relay 1101 and the second relay 1201 can be insulated by the mounting gap 1001, thereby enhancing the insulativity between the first relay 1101 and the second relay 1201, reducing a short circuit risk, and enhancing the use reliability of the power distribution apparatus 100.

In another embodiment of this application, with reference to FIG. 7 and FIG. 8, the first electrical connection member 1112 and the second electrical connection member 1212 are located on two opposite sides of the mounting gap 1001.

It may be understood that the first electrical connection member 1112 is located on one of the two opposite sides of the mounting gap 1001, and the second electrical connection member 1212 is located on the other of the two opposite sides of the mounting gap 1001.

Through the use of the technical solution in this embodiment, the mounting gap 1001 can insulate the first electrical connection member 1112 and the second electrical connection member 1212, so that a short circuit risk can be reduced, thereby enhancing the use reliability of the power distribution apparatus 100.

In another embodiment of this application, with reference to FIG. 14 and FIG. 15, in a case that the insulating member 130 is provided between the first electrical connection member 1112 and the second electrical connection member 1212, the insulating member 130 located between the first electrical connection member 1112 and the second electrical connection member 1212 is the second insulating member 132. The first electrical connection member 1112 includes a first electrical connection section 11121 and a second electrical connection section 11122 that are connected to each other. The first electrical connection section 11121 is electrically connected to the first terminal 1111. The second electrical connection member 1212 includes a third electrical connection section 12121 and a fourth electrical connection section 12122. The third electrical connection section 12121 is electrically connected to the second terminal 1211. The second electrical connection section 11122 and the fourth electrical connection section 12122 are located at the mounting gap 1001. The second insulating member 132 is provided between the second electrical connection section 11122 and the fourth electrical connection section 12122.

The first electrical connection section 11121 may be a portion of the first electrical connection member 1112 that is electrically connected to the first terminal 1111, and the second electrical connection section 11122 may be a portion of the first electrical connection member 1112 that is located in the mounting gap 1001. For example, the first electrical connection section 11121 is provided with a first connection hole 11124, and the first bolt 11112 passes through the first connection hole 11124 and is threaded to the first electrical connection portion 11111, thereby implementing the electrical connection between the first electrical connection section 11121 and the first terminal 1111.

The third electrical connection section 12121 may be a portion of the second electrical connection member 1212 that is electrically connected to the second terminal 1211, and the fourth electrical connection section 12122 may be a portion of the second electrical connection member 1212 that is located in the mounting gap 1001. For example, the third electrical connection section 12121 is provided with a second connection hole 12124, and the second bolt 12112 passes through the second connection hole 12124 and is threaded to the second electrical connection portion 12111, thereby implementing the electrical connection between the third electrical connection section 12121 and the second terminal 1211.

The second insulating member 132 may be an insulating element located between the second electrical connection section 11122 and the fourth electrical connection section 12122. The second insulating member 132 is made of an insulating material. The insulating material may be, but is not limited to, insulating plastics such as polypropylene (PP), polyethylene (PE), and polyvinyl chloride (PVC).

The second insulating member 132 is provided between the second electrical connection section 11122 and the fourth electrical connection section 12122. It may be understood that the second insulating member 132 is located between the second electrical connection section 11122 and the fourth electrical connection section 12122, so that the second insulating member 132 can insulate the second electrical connection section 11122 from the fourth electrical connection section 12122, thereby reducing a short circuit risk between the second electrical connection section 11122 and the fourth electrical connection section 12122, and enhancing the use reliability of the power distribution apparatus 100.

Through the use of the technical solution in this embodiment, the second electrical connection section 11122 and the fourth electrical connection section 12122 are located in the mounting gap 1001, and the second electrical connection section 11122 and the fourth electrical connection section 12122 can use the mounting gap 1001 as a mounting space, thereby enhancing the structural compactness of the power distribution apparatus 100, reducing the overall dimensions of the power distribution apparatus 100, and enhancing the structural compactness and reducing the manufacturing costs of the power consuming device and the battery. In addition, the arrangement of the second insulating member 132 provides better insulativity between the first electrical connection member 1112 and the second electrical connection member 1212, so that a short circuit risk is lower, thereby enhancing the use reliability of the power distribution apparatus 100.

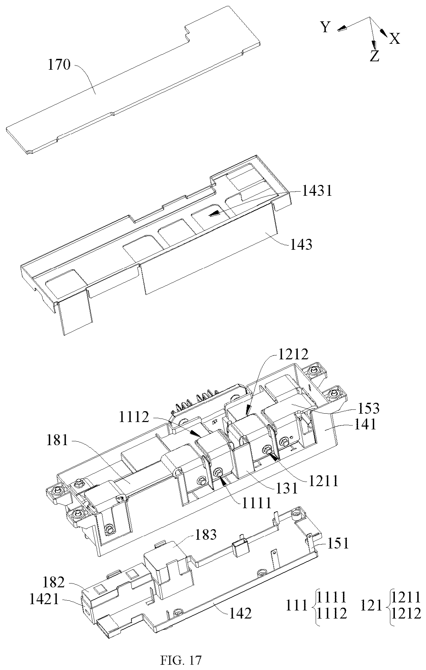

In another embodiment of this application, with reference to FIG. 16 to FIG. 19, a first insulating sleeve 133 is sleeved over the second electrical connection section 11122, and a portion of the first insulating sleeve 133 that is located between the second electrical connection section 11122 and the fourth electrical connection section 12122 at least forms a portion of the second insulating member 132.

The first insulating sleeve 133 may be an insulating element sleeved over the second electrical connection section 11122. The first insulating sleeve 133 is made of an insulating material. The insulating material may be, but is not limited to, insulating plastics such as polypropylene (PP), polyethylene (PE), and polyvinyl chloride (PVC). The first insulating sleeve 133 is formed with a first penetration hole, the second electrical connection section 11122 passes through the first penetration hole, and the second electrical connection section 11122 may form an interference fit or a clearance fit with the first penetration hole. The first insulating sleeve 133 may be alternatively formed outside the second electrical connection section 11122 through injection molding.

The portion of the first insulating sleeve 133 that is located between the second electrical connection section 11122 and the fourth electrical connection section 12122 at least forms a portion of the second insulating member 132. It may be understood that the portion of the first insulating sleeve 133 that is located between the second electrical connection section 11122 and the fourth electrical connection section 12122 forms a portion of the second insulating member 132 or the entire second insulating member 132. In addition, the portion can insulate the second electrical connection section 11122 from the fourth electrical connection section 12122. For example, the portion of the first insulating sleeve 133 that is located between the second electrical connection section 11122 and the fourth electrical connection section 12122 may be a side wall of the first insulating sleeve 133 that faces the fourth electrical connection section 12122.

Through the use of the technical solution in this embodiment, the insulation between the second electrical connection section 11122 and the fourth electrical connection section 12122 can be implemented by sleeving the first insulating sleeve 133 over the second electrical connection section 11122, and the operations of sleeving the first insulating sleeve 133 over the second electrical connection section 11122 are simple, thereby enhancing the production efficiency of the power distribution apparatus 100. In addition, the insulating structure is simple, thereby also reducing the manufacturing costs of the power distribution apparatus 100.

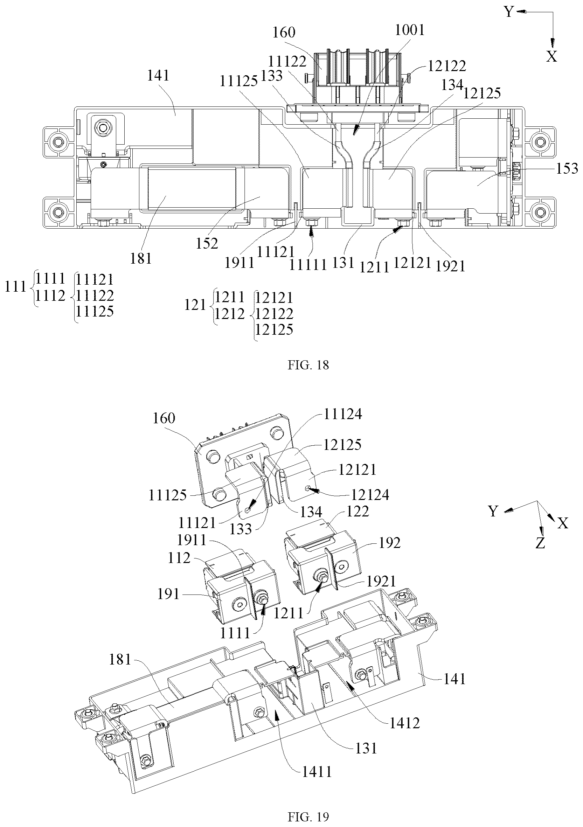

In another embodiment of this application, with reference to FIG. 18 and FIG. 19, a second insulating sleeve 134 is sleeved over the fourth electrical connection section 12122, and a portion of the second insulating sleeve 134 that is located between the second electrical connection section 11122 and the fourth electrical connection section 12122 at least forms a portion of the second insulating member 132.

The second insulating sleeve 134 may be an insulating element sleeved over the fourth electrical connection section 12122. The second insulating sleeve 134 is made of an insulating material. The insulating material may be, but is not limited to, insulating plastics such as polypropylene (PP), polyethylene (PE), and polyvinyl chloride (PVC). The second insulating sleeve 134 is formed with a second penetration hole, the fourth electrical connection section 12122 passes through the second penetration hole, and the fourth electrical connection section 12122 may form an interference fit or a clearance fit with the second penetration hole. The second insulating sleeve 134 may be alternatively formed outside the fourth electrical connection section 12122 through injection molding.

The portion of the second insulating sleeve 134 that is located between the second electrical connection section 11122 and the fourth electrical connection section 12122 at least forms a portion of the second insulating member 132. It may be understood that the portion of the second insulating sleeve 134 that is located between the second electrical connection section 11122 and the fourth electrical connection section 12122 forms a portion of the second insulating member 132 or the entire second insulating member 132. In addition, the portion can insulate the second electrical connection section 11122 from the fourth electrical connection section 12122. For example, the portion of the second insulating sleeve 134 that is located between the second electrical connection section 11122 and the fourth electrical connection section 12122 may be a side wall of the second insulating sleeve 134 that faces the second electrical connection section 11122.

Through the use of the technical solution in this embodiment, the insulation between the second electrical connection section 11122 and the fourth electrical connection section 12122 can be implemented by sleeving the second insulating sleeve 134 over the fourth electrical connection section 12122, and the operations of sleeving the second insulating sleeve 134 over the fourth electrical connection section 12122 are simple, thereby enhancing the production efficiency of the power distribution apparatus 100. In addition, the insulating structure is simple, thereby also reducing the manufacturing costs of the power di stribution apparatus 100.

In another embodiment of this application, with reference to FIG. 18 and FIG. 19, the first insulating sleeve 133 is sleeved over the second electrical connection section 11122, and the portion of the first insulating sleeve 133 that is located between the second electrical connection section 11122 and the fourth electrical connection section 12122 at least forms a portion of the second insulating member 132. The second insulating sleeve 134 is sleeved over the fourth electrical connection section 12122, and the portion of the second insulating sleeve 134 that is located between the second electrical connection section 11122 and the fourth electrical connection section 12122 at least forms a portion of the second insulating member 132.

Through the use of the technical solution in this embodiment, the second electrical connection section 11122 and the fourth electrical connection section 12122 are insulated by the second insulating sleeve 134 and the first insulating sleeve 133, and the insulation between the second electrical connection section 11122 and the fourth electrical connection section 12122 is better, so that a short circuit risk is lower, and the use reliability of the power distribution apparatus 100 is better. In addition, the sleeving and mounting operations of the first insulating sleeve 133 and the second insulating sleeve 134 are simple, thereby enhancing the production efficiency of the power distribution apparatus 100. In addition, the insulating structure is simple, thereby also reducing the manufacturing costs of the power distribution apparatus 100.

In another embodiment of this application, with reference to FIG. 15, the second insulating member 132 and the mounting base 141 are an integrally formed structure.

The second insulating member 132 and the mounting base 141 are an integrally formed structure. It may be understood that the second insulating member 132 and the mounting base 141 are an integrally formed structure obtained through integral molding. The integral molding is manufactured using an integral process such as extrusion, injection molding, and die casting.

Through the use of the technical solution in this embodiment, the second insulating member 132 and the mounting base 141 are an integrally formed structure, so that the connection reliability between the second insulating member 132 and the mounting base 141 is adequate, and the insulating reliability of the second insulating member 132 is adequate, thereby enhancing the use reliability of the power distribution apparatus 100. In addition, the manufacturing of the second insulating member 132 and the mounting base 141 is simple, thereby enhancing the production efficiency.

In another embodiment of this application, with reference to FIG. 19, the second insulating member 132 and the mounting base 141 are split structures.

It may be understood that the first insulating member 131 and the mounting base 141 may be two independent parts. Specifically, the second insulating member 132 and the mounting base 141 may be disposed separately, or may be connected by, but not limited to, bonding, clipping, or screwing. The material of the mounting base 141 may be the same as or different from that of the second insulating member 132.

Through the use of the technical solution in this embodiment, the mounting base 141 and the second insulating member 132 are split structures, so that the mounting base 141 and the second insulating member 132 can be flexibly disposed, thereby facilitating processing and manufacturing.

In another embodiment of this application, with reference to FIG. 15, the first insulating member 131, the second insulating member 132, and the mounting base 141 are an integrally formed structure.

It may be understood that the first insulating member 131, the second insulating member 132, and the mounting base 141 are an integrally formed structure obtained through integral molding. The integral molding is manufactured using an integral process such as extrusion, injection molding, and die casting. For example, the mounting base 141 is provided with a protrusion structure. A portion of the protrusion structure that is located in the mounting gap 1001 is the second insulating member 132. A portion of the protrusion structure that protrudes from the mounting gap 1001 is the first insulating member 131. The protrusion structure may fully isolate the first electrical connection structure 111 from the second electrical connection structure 121, thereby enhancing the insulation performance between the first electrical connection member 1112 and the second electrical connection member 1212. In addition, the first insulating member 131, the second insulating member 132, and the mounting base 141 are simple to manufacture, thereby enhancing the production efficiency. In addition, the protrusion structure is provided with a cavity, and the protrusion structure is a frame structure. The cavity can provide a mounting space for other elements, thereby enhancing the structural compactness, also reducing material buildup, and facilitating the lightweight design of the power distribution apparatus 100.

In another embodiment of this application, with reference to FIG. 18 and FIG. 19, the first insulating member 131 and the second insulating member 132 are split structures, and the first insulating member 131 and the mounting base 141 are an integrally formed structure. It may be understood that the first insulating member 131 and the second insulating member 132 may be two independent parts. The first insulating member 131 and the second insulating member 132 may be disposed separately, or may be connected by, but not limited to, bonding, clipping, or screwing. The material of the first insulating member 131 may be the same as or different from that of the second insulating member 132. In addition, the first insulating member 131 and the mounting base 141 are an integrally formed structure obtained through integral molding. The integral molding is manufactured using an integral process such as extrusion, injection molding, and die casting. For example, side walls of the first insulating sleeve 133 and the second insulating sleeve 134 that are opposite to each other form the second insulating member 132, and the first insulating member 131 is a protrusion structure formed by the mounting base 141. The protrusion structure is disposed at an opening of the mounting gap 1001 that is close to the first terminal 1111. The first electrical connection section 11121 and the first terminal 1111 are located on one side of the first insulating member 131, and the third electrical connection section 12121 and the second terminal 1211 are located on the other side of the first insulating member 131. In addition, the first insulating member 131 is a U-shaped structure, and opposite side walls of the first insulating member 131 of the U-shaped structure are respectively integrally formed structures with the cavity walls of the first accommodating cavity 1411 and the second accommodating cavity 1412 that are opposite to each other. In this way, the first electrical connection section 11121 and the first terminal 1111 can be fully isolated from the third electrical connection section 12121 and the second terminal 1211, thereby enhancing the insulating reliability of the first electrical connection structure 111 from the second electrical connection structure 121.

In an embodiment, with reference to FIG. 15, the first terminal 1111 and the second terminal 1211 are located outside the mounting gap 1001. In this way, a connection operation space for the first terminal 1111 and the first electrical connection member 1112 and a connection operation space for the second terminal 1211 and the second electrical connection member 1212 are staggered from the mounting gap 1001. In this way, a spacing between the first electrical component 110 and the second electrical component 120 can be reduced, so that the structural compactness of the arrangement of electrical components in the power distribution apparatus 100 is enhanced, thereby reducing the overall dimensions of the power distribution apparatus 100.

In an embodiment, with reference to FIG. 15, the first electrical component 110 and the second electrical component 120 are arranged in one direction (the Y direction). Other electrical components in the power distribution apparatus 100 are located on a lateral side of the first electrical component 110 that faces away from the second electrical component 120, or are located on a lateral side of the second electrical component 120 that faces away from the first electrical component 110. Such an arrangement facilitates the long-strip shape of the power distribution apparatus 100. The power distribution apparatus 100 can be mounted in some narrow spaces in a power consuming device and a battery, thereby enhancing the utilization of space in the power consuming device and the battery, and enhancing the structural compactness and reducing the manufacturing costs of the power consuming device and the battery.

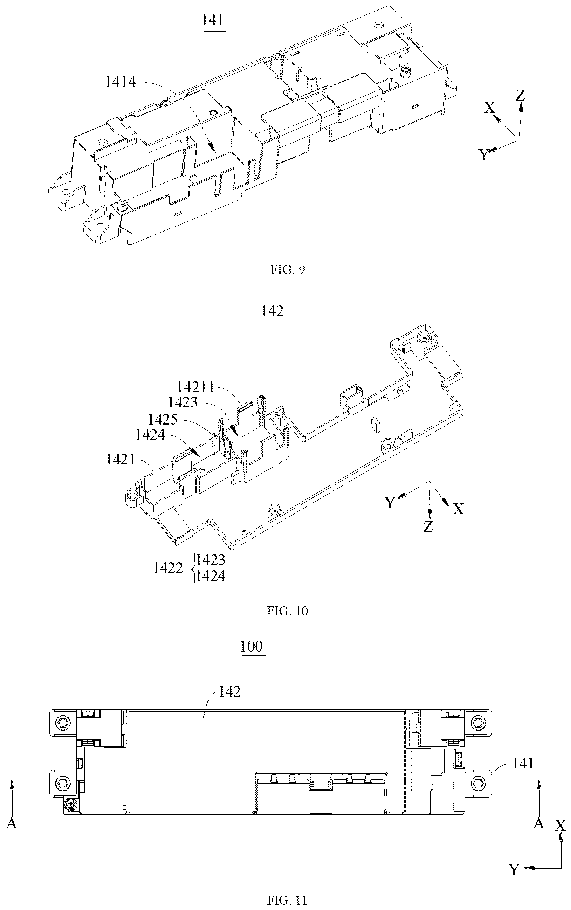

In an embodiment, with reference to FIG. 11, FIG. 12, and FIG. 13, the mounting base 141 is covered with a first housing cover 142. A third electrical connection member 151 is embedded in the first housing cover 142. The third electrical connection member 151 is configured to electrically connect to the first electrical component 110, the second electrical component 120, and other electrical components. The first electrical component 110, the second electrical component 120, and other electrical components are electrically connected by one third electrical connection member 151 or a plurality of third electrical connection members 151. In addition, when the third electrical connection member 151 is embedded in the first housing cover 142, and during assembly, while the first housing cover 142 covers the mounting base 141, the third electrical connection member 151 is electrically mated with electrical components in the power distribution apparatus 100, so that the assembly of the power distribution apparatus 100 is simple and fast. The third electrical connection member 151 is made of copper, aluminum, or another conductive material. For example, the third electrical connection member 151 is a copper busbar.

In an embodiment, with reference to FIG. 8 and FIG. 9, a plurality of accommodating cavities are formed in the mounting base 141. The electrical components of the power distribution apparatus 100 are mounted in the accommodating cavities. Openings of the accommodating cavities are different, and the first housing cover 142 may cover the openings of some accommodating cavities. The mounting base 141 is covered with a second housing cover 143. The second housing cover 143 covers the openings of some accommodating cavities. An insulating heat conduction member 170 is provided at a lateral portion of the second housing cover 143 that faces away from the mounting base 141. In addition, the second housing cover 143 is provided with an accommodating hole 1431, and the accommodating hole 1431 may accommodate the first electrical connection member 1112, so that the first electrical connection member 1112 is in contact with the insulating heat conduction member 170, thereby enhancing heat dissipation efficiency. The accommodating hole 1431 may accommodate the second electrical connection member 1212, so that the second electrical connection member 1212 is in contact with the insulating heat conduction member 170, thereby enhancing heat dissipation efficiency. The material of the insulating heat conduction member 170 may be ceramic, silicone, or another insulating heat conduction material.

To describe the technical solutions of this application clearly, structures of some BDUs are used as examples for description.

### Embodiment 1

In this embodiment, with reference to FIG. 5 to FIG. 13, the power distribution apparatus 100 is a BDU. The first electrical component 110 is the main positive relay 1102. The second electrical component 120 is the main negative relay 1202. The power distribution apparatus 100 further includes the mounting base 141, the first housing cover 142, the second housing cover 143, a pre-charge resistor 182, a fuse 181, and a pre-charge relay 183. The fuse 181, the main positive relay 1102, and the main negative relay 1202 are sequentially arranged from left to right, the pre-charge relay 183 and the pre-charge resistor 182 are located on a front side of the fuse 181, and the pre-charge relay 183 and the pre-charge resistor 182 are arranged from left to right. Such an arrangement ensures the long-strip shape of the power distribution apparatus 100, so that the power distribution apparatus 100 is more compact. The first accommodating cavity 1411, the second accommodating cavity 1412, a third accommodating cavity 1413, and a fourth accommodating cavity 1414 are formed in the mounting base 141. The main positive relay 1102, the main negative relay 1202, and the fuse 181 are respectively mounted in the first accommodating cavity 1411, the second accommodating cavity 1412, and the third accommodating cavity 1413. The first opening 14111 of the first accommodating cavity 1411 and the second opening 14121 of the second accommodating cavity 1412 are provided facing backward, and an opening of the third accommodating cavity 1413 is provided facing downward. The second housing cover 143 covers a lower side of the mounting base 141 and blocks the first opening 14111, the second opening 14121, and the opening of the third accommodating cavity 1413, thereby implementing the insulation and protection for electrical components in the power distribution apparatus 100.

In this embodiment, the main positive relay 1102 and the main negative relay 1202 are relays with cases removed, the cavity wall of the second accommodating cavity 1412 forms a case of the main positive relay 1102, and a cavity wall of the third accommodating cavity 1413 forms a case of the main negative relay 1202.

In this embodiment, the main positive relay 1102 with the case removed includes the first switch unit 112 and the first electrical connection structure 111. The first switch unit 112 is located in the first accommodating cavity 1411. The first electrical connection structure 111 is led out from a rear end of the first switch unit 112. The first electrical connection structure 111 includes the first terminal 1111 and the first electrical connection member 1112. The first terminal 1111 includes the first electrical connection portion 11111 and the first bolt 11112. The first electrical connection portion 11111 is electrically connected to a contact of the main positive relay 1102. The first insulating cover member 191 is sleeved over a rear end of the main positive relay 1102. The first insulating cover member 191 is provided with the first through hole 1912. The first electrical connection portion 11111 passes through two first through holes 1912. The first electrical connection member 1112 is electrically connected to the first electrical connection portion 11111 by the first bolt 11112. The first insulating cover member 191 can close the first opening 14111, thereby insulating and protecting the first switch unit 112.

In this embodiment, the main negative relay 1202 with the case removed includes the second switch unit 122 and the second electrical connection structure 121. The second switch unit 122 is located in the second accommodating cavity 1412. The second electrical connection structure 121 is led out from a rear end of the second switch unit 122. The second electrical connection structure 121 includes the second terminal 1211 and the second electrical connection member 1212. The second terminal 1211 includes the second electrical connection portion 12111 and the second bolt 12112. The second electrical connection portion 12111 is electrically connected to a contact of the main positive relay 1102. The second insulating cover member 192 is sleeved over the rear end of the main positive relay 1102. The second insulating cover member 192 is provided with the second through hole 1922. The second electrical connection portion 12111 passes through two second through holes 1922. The second electrical connection member 1212 is electrically connected to the second electrical connection portion 12111 by the second bolt 12112. The second insulating cover member 192 can close the second opening 14121, thereby insulating and protecting the second switch unit 122.

In this embodiment, the first electrical connection member 1112 extends to a front side of the mounting base 141 from the first terminal 1111 along outer surfaces of a rear side wall and a lower side wall of the first accommodating cavity 1411, to facilitate electrical connection to external electrical components. The second electrical connection member 1212 extends to a front side of the mounting base 141 from the second terminal 1211 along outer surfaces of a rear side wall and a lower side wall of the second accommodating cavity 1412, to facilitate electrical connection to external electrical components.

In this embodiment, a portion of the first electrical connection member 1112 that is located on a rear side of the first accommodating cavity 1411 is the first electrical connection section 11121, a portion of the first electrical connection member 1112 that is located on a lower side of the first accommodating cavity 1411 is the second electrical connection section 11122, and a portion of the first electrical connection member 1112 that is located on a front side of the first accommodating cavity 1411 is a fifth electrical connection section 11123. A portion of the second electrical connection member 1212 that is located on a rear side of the second accommodating cavity 1412 is the third electrical connection section 12121, a portion of the second electrical connection member 1212 that is located on a lower side of the second accommodating cavity 1412 is the fourth electrical connection section 12122, and a portion of the second electrical connection member 1212 that is located on a front side of the second accommodating cavity 1412 is a sixth electrical connection section 12123. The first electrical connection section 11121 is provided with the first connection hole 11124, the third electrical connection section 12121 is provided with the second connection hole 12124, the first bolt 11112 passes through the first connection hole 11124 and is threaded to the first electrical connection portion 11111, and the second bolt 12112 passes through the second connection hole 12124 and is threaded to the second electrical connection portion 12111.

In this embodiment, two first terminals 1111 are provided. One of the first terminals 1111 is electrically connected to the first electrical connection section 11121, the other of the first terminals 1111 is electrically connected to one end of a fourth electrical connection member 152, and the other end of the fourth electrical connection member 152 is electrically connected to the fuse 181. The first insulating isolation portion 1911 is disposed on a rear side of the first insulating cover member 191. The first insulating isolation portion 1911 is located between two first terminals 1111, and insulates the two first terminals 1111 and the first electrical connection section 11121 from the fourth electrical connection member 152, thereby implementing the insulation between the two first terminals 1111 of the main positive relay 1102.

In this embodiment, two second terminals 1211 are provided. One of the second terminals 1211 is electrically connected to the third electrical connection section 12121, the other of the second terminals 1211 is electrically connected to one end of a fifth electrical connection member 153, and the other end of the fifth electrical connection member 153 is electrically connected to other electrical components. The second insulating isolation portion 1921 is disposed on a rear side of the second insulating cover member 192. The second insulating isolation portion 1921 is located between two second terminals 1211, and insulates the two second terminals 1211 and the third electrical connection section 12121 from the fifth electrical connection member 153, thereby implementing the insulation between the two second terminals 1211 of the main negative relay 1202. The fourth electrical connection member 152 and the fifth electrical connection member 153 are made of copper, aluminum, or another conductive material, and for example, are copper busbars.

In this embodiment, the mounting gap 1001 is formed between the cavity walls of the first accommodating cavity 1411 and the second accommodating cavity 1412 that are opposite to each other. The second electrical connection section 11122 and the fourth electrical connection section 12122 are located on two opposite sides of the mounting gap 1001, and are isolated by the mounting gap 1001, so that the second electrical connection structure 121 is insulated from a fourth electrical connection structure. In addition, the first insulating member 131 is provided between the first electrical connection section 11121 and the second electrical connection section 11122. In addition, the first insulating member 131 is a U-shaped structure, and opposite side walls of the first insulating member 131 of the U-shaped structure are respectively integrally formed structures with the cavity walls of the first accommodating cavity 1411 and the second accommodating cavity 1412 that are opposite to each other. In this way, the first electrical connection section 11121 and the first terminal 1111 can be fully isolated from the third electrical connection section 12121 and the second terminal 1211, thereby enhancing the insulating reliability of the first electrical connection structure 111 from the second electrical connection structure 121.

**In** this embodiment, a plurality of accommodating holes 1431 are provided at a bottom of the second housing cover 143, the insulating heat conduction member 170 is further provided at the bottom of the second housing cover 143, and the second electrical connection section 11122 is located in the accommodating holes 1431 and is in direct contact with the insulating heat conduction member 170, thereby enhancing heat dissipation. Similarly, the fourth electrical connection section 12122 is located in the accommodating holes 1431 and is in direct contact with the insulating heat conduction member 170. Certainly, the fourth electrical connection member 152 and the fifth electrical connection member 153 may be alternatively partially located in corresponding accommodating holes 1431 and are in direct contact with the insulating heat conduction member 170, thereby enhancing heat dissipation. In addition, electrical connection members led out from the fuse 181, the pre-charge resistor 182, and the pre-charge relay 183 may be alternatively at least partially located in corresponding accommodating holes 1431 and are in direct contact with the insulating heat conduction member 170, thereby enhancing heat dissipation.

In this embodiment, the first housing cover 142 is provided with a peripheral rim 1421. The peripheral rim 1421 forms a fifth accommodating cavity 1422. The pre-charge relay 183 and the pre-charge resistor 182 are located in the fifth accommodating cavity 1422. An insulating isolation plate 1425 is formed between the pre-charge relay 183 and the pre-charge resistor 182. The insulating isolation plate 1425 divides the fifth accommodating cavity 1422 into a sixth accommodating cavity 1423 and a seventh accommodating cavity 1424. The pre-charge relay 183 and the pre-charge resistor 182 are respectively mounted in the sixth accommodating cavity 1423 and the seventh accommodating cavity 1424. The peripheral rim 1421 is provided with a snap-fit clip 14211. The snap-fit clip 14211 is configured to fix the pre-charge relay 183 and the pre-charge resistor 182 to facilitate subsequent assembly. The insulating isolation plate 1425 insulates the pre-charge relay 183 from the pre-charge resistor 182.

In this embodiment, the first housing cover 142 covers a bottom of the mounting base 141. The peripheral rim 1421 is inserted into the fourth accommodating cavity 1414. The plurality of third electrical connection members 151 are embedded in the first housing cover 142. In a process of fixing the pre-charge relay 183 and the pre-charge resistor 182 in the peripheral rim 1421, the pre-charge relay 183 and the pre-charge resistor 182 are electrically mated with the corresponding third electrical connection members 151. While the first housing cover 142 covers the mounting base 141, the fuse 181, the main positive relay 1102, and the main negative relay 1202 are electrically mated with the corresponding third electrical connection members 151, thereby electrically connecting the fuse 181, the main positive relay 1102, the main negative relay 1202, the pre-charge relay 183, and the pre-charge resistor 182 of the power distribution apparatus 100. The electrical mating structures of the electrical components and the third electrical connection members 151 in the power distribution apparatus 100 may be the same. An example in which the pre-charge relay 183 is electrically mated with the corresponding third electrical connection member 151 is used for description. A mating terminal 1831 of the pre-charge relay 183 is electrically mated with an end portion of the corresponding third electrical connection member 151 that is exposed from the first housing cover 142. Certainly, the electrical mating structures of the electrical components and the third electrical connection members 151 in the power distribution apparatus 100 may be different. The mating terminal 1831 may be a control terminal led out from a coil of the pre-charge relay 183, or may be a high-voltage sampling terminal led out from the pre-charge relay 183, or the like.

### Embodiment 2

With reference to FIG. 14 and FIG. 15, differences between this embodiment and Embodiment 1 lie in that the fuse 181, the main positive relay 1102, and the main negative relay 1202 are sequentially arranged from left to right, the pre-charge relay 183 and the pre-charge resistor 182 are located on a rear side of the fuse 181, and the pre-charge relay 183 and the pre-charge resistor 182 are arranged from left to right. Such an arrangement ensures the long-strip shape of the power distribution apparatus 100, so that the power distribution apparatus 100 is more compact. The first accommodating cavity 1411, the second accommodating cavity 1412, the third accommodating cavity 1413, the fourth accommodating cavity 1414, and the fifth accommodating cavity 1422 are formed in the mounting base 141. The main positive relay 1102, the main negative relay 1202, the fuse 181, the pre-charge relay 183, and the pre-charge resistor 182 are respectively mounted in the first accommodating cavity 1411, the second accommodating cavity 1412, the third accommodating cavity 1413, the fourth accommodating cavity 1414, and the fifth accommodating cavity 1422. The first opening 14111 of the first accommodating cavity 1411 and the second opening 14121 of the second accommodating cavity 1412 are provided facing forward, and the opening of the third accommodating cavity 1413, an opening of the fourth accommodating cavity 1414, and an opening of the fifth accommodating cavity 1422 are provided facing upward. The second housing cover 143 covers an upper side of the mounting base 141 and blocks the first opening 14111, the second opening 14121, the opening of the third accommodating cavity 1413, the opening of the fourth accommodating cavity 1414, and the opening of the fifth accommodating cavity 1422.

In this embodiment, the second electrical connection section 11122 and the fourth electrical connection section 12122 are located in the mounting gap 1001, the insulating member 130 is located in the mounting gap 1001 and protrudes from the mounting gap 1001, and a portion of the insulating member 130 that protrudes from the mounting gap 1001 forms the first insulating member 131. In addition, the first insulating member 131 is located between the first terminal 1111 and the second terminal 1211, a portion of the insulating member 130 that is located in the mounting gap 1001 forms the second insulating member 132, and the second insulating member 132 is located between the second electrical connection section 11122 and the fourth electrical connection section 12122. In this way, the first electrical connection structure 111 can be fully insulated from the second electrical connection structure 121, so that the insulativity between the first electrical connection structure 111 and the second electrical connection structure 121 is adequate, thereby improving the use reliability of the power distribution apparatus 100. The first insulating member 131, the second insulating member 132, and the mounting base 141 are an integrally injection-molded structure and form a whole. The insulating member 130 is a frame structure, and a space formed by the hollow middle can be configured for mounting other elements, thereby reducing the mass of the power distribution apparatus 100.

In this embodiment, the BDU further includes a connector 160, the connector 160 is mounted on a rear side of the mounting base 141, and a rear end of the second electrical connection section 11122 is electrically connected to a rear end of the fourth electrical connection section 12122.

### Embodiment 3

With reference to FIG. 16 to FIG. 19, differences between this embodiment and Embodiment 1 lie in that the second electrical connection section 11122 and the fourth electrical connection section 12122 are located in the mounting gap 1001, a seventh electrical connection section 11125 is connected between the first electrical connection section 11121 and the second electrical connection section 11122, and the seventh electrical connection section 11125 is located below a lower cavity wall of the first accommodating cavity 1411. In this way, the first electrical connection section 11121 located on a rear side and the second electrical connection section 11122 located in the mounting gap 1001 are connected together. An eighth electrical connection section 12125 is connected between the third electrical connection section 12121 and the fourth electrical connection section 12122, and the eighth electrical connection section 12125 is located below a lower cavity wall of the second accommodating cavity 1412. In this way, the third electrical connection section 12121 located on a rear side and the fourth electrical connection section 12122 located in the mounting gap 1001 are connected together. The seventh electrical connection section 11125 is located in the accommodating holes 1431 and is in direct contact with the insulating heat conduction member 170, thereby enhancing heat dissipation. Similarly, the eighth electrical connection section 12125 is located in the accommodating holes 1431 and is in direct contact with the insulating heat conduction member 170. The first insulating sleeve 133 is sleeved over the second electrical connection section 11122, the second insulating sleeve 134 is sleeved over the fourth electrical connection section 12122, and a right side wall of the first insulating sleeve 133 and a left side wall of the second insulating sleeve 134 together form the second insulating member 132.

In this embodiment, the BDU further includes a connector 160, the connector 160 is mounted on a front side of the mounting base 141, and a front end of the second electrical connection section 11122 is electrically connected to a front end of the fourth electrical connection section 12122.

According to another embodiment of this application, a battery 1100 is provided, including the power distribution apparatus 100 in the foregoing embodiments.

According to another embodiment of this application, a power consuming device is provided, including the power distribution apparatus 100 in the foregoing embodiments, and/or, including the battery 1100 in the foregoing embodiments.

The above description of the various embodiments tends to emphasize the differences between the various embodiments. The embodiments may be cross-referenced for identical or similar parts, and details are not described herein again for the sake of brevity.

In conclusion, it should be noted that the foregoing embodiments are for description of the technical solutions of this application only rather than for limiting this application. Although this application has been described in detail with reference to the foregoing embodiments, those of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. Especially, as long as there is no structural conflict, the various technical features mentioned in each embodiment can be combined in any way. This application is not limited to the particular embodiments disclosed herein, but comprises all technical solutions that fall within the scope of the claims.

## Claims

1. A power distribution apparatus, comprising:
a first electrical component, comprising a first electrical connection structure;
a second electrical component, comprising a second electrical connection structure, wherein the first electrical connection structure and the second electrical connection structure are spaced apart, wherein
an insulating member is provided between the first electrical connection structure and the second electrical connection structure.

2. The power distribution apparatus according to claim 1, wherein the insulating member is provided at a position with the shortest distance between the first electrical connection structure and the second electrical connection structure.

3. The power distribution apparatus according to claim 2, wherein
a spacing at the position with the shortest distance between the first electrical connection structure and the second electrical connection structure ranges from 3 mm to 9 mm.

4. The power distribution apparatus according to claim 3, wherein the spacing at the position with the shortest distance between the first electrical connection structure and the second electrical connection structure ranges from 3 mm to 6 mm.

5. The power distribution apparatus according to any one of claims 2 to 4, wherein
the first electrical connection structure comprises a first terminal and a first electrical connection member, the first electrical connection member is electrically connected to the first terminal, the second electrical connection structure comprises a second terminal and a second electrical connection member, and the second electrical connection member is electrically connected to the second terminal;
in a case that the position with the shortest distance between the first electrical connection structure and the second electrical connection structure is located between the first terminal and the second terminal, the insulating member is provided between the first terminal and the second terminal; and
in a case that the position with the shortest distance between the first electrical connection structure and the second electrical connection structure is located between the first electrical connection member and the second electrical connection member, the insulating member is provided between the first electrical connection member and the second electrical connection member.

6. The power distribution apparatus according to any one of claims 1 to 5, wherein the first electrical connection structure comprises the first terminal and the first electrical connection member, the first electrical connection member is electrically connected to the first terminal, the second electrical connection structure comprises the second terminal and the second electrical connection member, and the second electrical connection member is electrically connected to the second terminal; and
the insulating member is provided between the first terminal and the second terminal, and the insulating member is provided between the first electrical connection member and the second electrical connection member.

7. The power distribution apparatus according to claim 5 or 6, wherein the first electrical component is a first relay, the first terminal is a connection terminal led out from a contact of the first relay, the second electrical component is a second relay, and the second terminal is a connection terminal led out from a contact of the second relay.

8. The power distribution apparatus according to claim 7, wherein the power distribution apparatus further comprises a mounting base, the mounting base is constructed with a first accommodating cavity and a second accommodating cavity, the first relay further comprises a first switch unit, the first switch unit is electrically connected to the first terminal, the first switch unit is exposed from the first accommodating cavity, the second relay comprises a second switch unit, the second switch unit is electrically connected to the second terminal, and the second switch unit is exposed from the second accommodating cavity.

9. The power distribution apparatus according to claim 8, wherein the first accommodating cavity is provided with a first opening, the second accommodating cavity is provided with a second opening, the first opening and the second opening are located on a same side of the mounting base, the first terminal protrudes from the first opening, and the second terminal protrudes from the second opening.

10. The power distribution apparatus according to claim 9, wherein in a case that the insulating member is provided between the first terminal and the second terminal, the insulating member located between the first terminal and the second terminal is a first insulating member, a projection of the first insulating member in a first direction covers a projection of a portion of the first terminal that protrudes from the first opening in the first direction, and the first direction is a distribution direction of the first terminal and the second terminal; and/or the projection of the first insulating member in the first direction covers a projection of a portion of the second terminal that protrudes from the second opening in the first direction, and the first direction is the distribution direction of the first terminal and the second terminal.

11. The power distribution apparatus according to claim 9 or 10, wherein in a case that the insulating member is provided between the first terminal and the second terminal, the insulating member located between the first terminal and the second t erminal is the first insulating member, in a second direction, the first insulating member is disposed protruding with respect to the first terminal, the second direction intersects the first direction, and the first direction is the distribution direction of the first terminal and the second terminal; and/or
in the second direction, the first insulating member is disposed protruding with respect to the second terminal, the second direction intersects the first direction, and the first direction is the distribution direction of the first terminal and the second terminal.

12. The power distribution apparatus according to claim 11, wherein
in a case that the first insulating member protrudes from the first terminal, a protrusion height of the first insulating member with respect to the first terminal is H₁, wherein 5 mm ≤ H₁ ≤ 30 mm; and
in a case that the first insulating member protrudes from the second terminal, a protrusion height of the first insulating member with respect to the second terminal is H₂, wherein 5 mm ≤ H₂ ≤ 30 mm.

13. The power distribution apparatus according to any one of claims 10 to 12, wherein the first insulating member and the mounting base are an integrally formed structure.

14. The power distribution apparatus according to any one of claims 10 to 13, wherein the power distribution apparatus further comprises a first insulating cover member, the first insulating cover member covers the first opening and blocks the first opening, and the first insulating cover member is provided with a first through hole, and the first terminal passes through the first through hole; and/or
the power distribution apparatus further comprises a second insulating cover member, the second insulating cover member covers the second opening and blocks the second opening, and the second insulating cover member is provided with a second through hole, and the second terminal passes through the second through hole.

15. The power distribution apparatus according to claim 14, wherein in a case that the power distribution apparatus comprises the first insulating cover member, the first relay comprises a plurality of first electrical connection structures, a first insulating isolation portion is disposed at a lateral portion of the first insulating cover member that faces away from the first switch unit, and the first insulating isolation portion is located between two adjacent first electrical connection structures; and
in a case that the power distribution apparatus comprises the second insulating cover member, the first relay comprises a plurality of second electrical connection structures, a second insulating isolation portion is disposed at a lateral portion of the second insulating cover member that faces away from the second switch unit, and the second insulating isolation portion is located between two adjacent second electrical connection structures.

16. The power distribution apparatus according to any one of claims 8 to 14, wherein a mounting gap is formed between cavity walls of the first accommodating cavity and the second accommodating cavity that are opposite to each other.

17. The power distribution apparatus according to claim 16, wherein the first electrical connection member and the second electrical connection member are located on two opposite sides of the mounting gap.

18. The power distribution apparatus according to claim 16, wherein in a case that the insulating member is provided between the first electrical connection member and the second electrical connection member, the insulating member located between the first electrical connection member and the second electrical connection member is a second insulating member;
the first electrical connection member comprises a first electrical connection section and a second electrical connection section that are connected to each other, and the first electrical connection section is electrically connected to the first terminal;
the second electrical connection member comprises a third electrical connection section and a fourth electrical connection section, and the third electrical connection section is electrically connected to the second terminal; and
the second electrical connection section and the fourth electrical connection section are located at the mounting gap, and the second insulating member is provided between the second electrical connection section and the fourth electrical connection se ction.

19. The power distribution apparatus according to claim 18, wherein a first insulating sleeve is sleeved over the second electrical connection section, and a portion of the first insulating sleeve that is located between the second electrical connection section and the fourth electrical connection section at least forms a portion of the second insulating member; and/or
a second insulating sleeve is sleeved over the fourth electrical connection section, and a portion of the second insulating sleeve that is located between the second electrical connection section and the fourth electrical connection section at least forms a portion of the second insulating member.

20. The power distribution apparatus according to claim 18 to 19, wherein the second insulating member and the mounting base are an integrally formed structure, or, the second insulating member and the mounting base are split structures.

21. A battery, comprising the power distribution apparatus according to any one of claims 1 to 20.

22. A power consuming device, comprising the power distribution apparatus according to any one of claims 1 to 20, and/or, comprising the battery according to claim 21.
